# EUROPEAN PATENT SPECIFICATION

(11) **EP 4 067 154 B1**
(45) Date of publication and mention of the grant of the patent: **04.11.2026**
(21) Application number: 21216730.8
(22) Date of filing: 22.12.2021
(51) Int. Cl.: B60L 7/18, G01D 5/353, G01L 1/24

(54) **MONITORING SYSTEM AND OPTICAL FIBER SENSOR FOR PANTOGRAPH**
ÜBERWACHUNGSSYSTEM UND FASEROPTISCHER SENSOR FÜR STROMABNEHMER
SYSTÈME DE SURVEILLANCE ET CAPTEUR À FIBRE OPTIQUE DE PANTOGRAPHE

(30) Priority: 02.04.2021 CN 202110362246
(43) Date of publication of application: 05.10.2022
(73) Proprietor: Shanghai Baiantek Sensing Technology Co., Ltd., Shanghai 200000 (CN)
(72) Inventor: WU, Xunqi, Pudong New Area, Shanghai 200000 (CN); ZHONG, Shaolong, Pudong New Area, Shanghai 200000 (CN)
(74) Representative: Kolster Oy Ab

(56) References cited:
- US-A1- 2020 055 401
- US-B1- 6 418 397
- BAI YUFANG ET AL: "Measurement of Structural Loads Using a Novel MEMS Extrinsic Fabry-Perot Strain Sensor", vol. 10, no. 1, 18 December 2019 (2019-12-18), pages 18, XP055928162, ISSN: 2076-3417, Retrieved from the Internet <URL:http://dx.doi.org/10.3390/app10010018> DOI: 10.3390/app10010018

## Description

### TECHNICAL FIELD

The present disclosure relates to the field of measurement technology, in particular to a monitoring system and optical fiber sensors for a pantograph.

### BACKGROUND

As China's urbanization rate continues to increase, the migration of population to cities has caused a rapid increase in urban population, and the pressure on transportation continues to increase. Compared with other urban transportation modes, rail transit has the highest efficiency among public transportation modes and is one of the best ways to solve urban travel problems. Rail transit represented by high-speed railways and urban subways has become the main means of transportation for people to travel. Under the "Eight Vertical and Eight Horizontal" plans in the domestic high-speed rail market, the high-speed rail network will be gradually improved in the future. There will be higher demand for the production of high-speed rail vehicles, such as electric passenger-bus.

Specifically, high-frequency crowd-intensive trips have brought serious challenges to the operational safety of the rail transit industry. Among them, the good pantograph working condition of electric passenger-buses, the working condition of the catenary line, and the relationship between the pantograph and the catenary line, and the current receiving relationship between the pantograph and the catenary line is the top priority for the safety of electric passenger-bus operation.

However, in an existing monitoring technology, the use of machine vision sensors to monitor the state of the pantograph and the catenary line has low accuracy and high error rate.

In another existing monitoring technology, electronic sensors are used to monitor the state of the pantograph and the catenary line. However, due to its large size, large volume, and heavy weight, it is easy to affect the normal operation of the pantograph, and due to the electronic sensors are active devices, and their signal transmission cables have potential safety hazards, improper installation and wiring processes or mechanical damage from external forces can cause serious electrical insulation accidents, and even introduce high voltage on the roof of the car, which poses a threat to the safety of personnel, and the collected data signals are often severely affected by electromagnetic interference, which brings great difficulties to the accurate analysis of subsequent data.

There is an urgent need for a pantograph monitoring system that collects monitoring parameters based on smaller and lighter monitoring elements, so as to avoid affecting the normal operation of the pantograph, and improve real-time collection, analysis, and also feedback of accuracy of the operating parameters related to the pantograph, the catenary line and the relationship between the pantograph and the catenary line.

US6418397B1discloses an improved device for measuring the contact force between a contact wire and a power collector in an electrically powered vehicle, specially an electrical railway vehicle, by use of optical fiber force sensors. To this end, two compact force sensors are arranged between the base body of the contact strip and the pantograph rocker frame or between the wearing element or shoe and the base body of the contact strip. Each sensor includes a deformable body, which is elastic in an axial direction but highly rigid crosswise, with the body being fitted with an integrated optical fuber reflex sensor. Axial deformations of the deformable body equivalent to the contact force are detected by the reflex sensor with high resolution, accuracy and no interference, are then signaled to a device via optical fibers requiring no potential and converted therein into contact force-equivalent signals or instructions.

BAI YUFANG ET AL discloses microelectromechanical systems (MEMS) technology was used to fabricate a novel extrinsic fiber Fabry-Perot (EFFP) strain sensor; this fiber sensor is applied to measure load with higher precision for a small structure. The sensor cavity consists of two Fabry-Perot (FP) cavity mirrors that are processed by surface micromachining and then fused and spliced together by the silicon-glass anode bonding process. The initial cavity length can be strictly controlled, and the excellent parallelism of the two faces of the cavity results in a high interference fineness. Then, the anti-reflection coating process is applied to the sensor to improve the clarity of the interference signal with the cavity, with its wavelength working within the range of the C + L band. Next, the sensor placement is determined by the finite element software Nastran. Experimental results indicate that the sensor exhibits a good linear response (99.77%) to load changes and a high repeatability. Considering the strain transfer coefficient, the sensitivity for the tested structure load is as high as 35.6 pm/N. Due to the miniaturization, repeatability, and easy-to-batch production, the proposed sensor can be used as a reliable and practical force sensor.

US 2020/0055401 A1 discloses an optical monitoring system for a current collector of an electric vehicle, comprising optical sensor modules, an optical source and an optical signal interpretation module for determining strain/contact-force related measurements.

### SUMMARY

The technical problem solved by the present disclosure is to provide a monitoring system and optical fiber sensors for a pantograph, which can avoid the signal interference of adjacent wave peaks to the wave peak in the bandwidth of the laser during process of the data analysis, and effectively prevent code cross-talk.

The present disclosure provides a monitoring system for a pantograph, including: one or more optical fiber sensors, installed on the pantograph for receiving laser signal; and a processor, coupled to the optical fiber sensors, and configured to process the laser signal collected by the optical fiber sensors; wherein each optical fiber sensor has an optical interference cavity, the laser signal enters the optical interference cavity to form a comb-shaped spectrum, and a cavity length of the optical interference cavity satisfies following formula: $\frac{{k}_{mid}}{2} \left({λ}_{ctr}-\frac{{W}_{laser}}{2}\right) < {l}_{FP} < \frac{{k}_{mid}}{2} \left({λ}_{ctr}+\frac{{W}_{laser}}{2}\right)$ ${W}_{laser} \leq \frac{2 {l}_{FP}}{{k}_{mid}^{2} - 1}$
wherein *l_{FP}* represents the cavity length of the optical interference cavity, *k_{mid}* represents a preset longitudinal modulus of the optical fiber sensor, *k_{mid}* is a positive integer and *k_{mid}* ≥*2*, *Wₗₐₛₑᵣ* represents a bandwidth of a laser emitting the laser signal, and *λ*_{*c*tr}, represents a wavelength value of a center point of the bandwidth of the laser; and
wherein the optical interference cavity includes two mirrors respectively disposed at both ends of the optical interference cavity, and the cavity length of the optical interference cavity is a distance between the two mirrors;
and that the monitoring system comprises, as the one or more optical fiber sensors at least one contact-force sensor to collect a pressure signal, at least one load sensor to collect a load signal, at least one accelerometer to collect an acceleration signal, at least one current sensor to collect a current signal, at least one temperature sensor to collect a temperature signal and at least one air pressure sensor to collect an air pressure signal; wherein only a single peak in the comb-shaped spectrum output from the optical interference cavity is located within the bandwidth of the laser

In some embodiments, the cavity length of the optical interference cavity satisfies following formula: ${l}_{ctr} = {k}_{mid} \frac{{λ}_{ctr}}{2}$
wherein *l_{ctr}* represents the cavity length of the optical interference cavity.

In some embodiments, the optical fiber sensor is a passive sensor.

In some embodiments, the optical fiber sensors include at least one contact-force sensor to collect pressure signal, and the pantograph includes one or more pantograph bows, and each pantograph bow includes a bow support; wherein for pantograph bows equipped with contact-force sensors, the contact-force sensors are installed inside or on a surface of bow supports.

In some embodiments, the contact-force sensors are arranged in pairs, and the pair of contact-force sensors are respectively installed on the bow supports at both ends of the same pantograph bow.

In some embodiments, the bow supports correspond to the contact-force sensors one-to-one, and a corresponding contact-force sensor is installed inside or on the surface of each bow support.

In some embodiments, a temperature sensor is embedded in the contact-force sensor, or, the contact-force sensor is coupled with a temperature sensor.

In some embodiments, the pressure signal is used to indicate a quality of a carbon-contact-strip structure of the pantograph; and an amount of wear of the carbon-contact-strip structure is determined by the processor using following formula: ${G}_{0 , i} = {\sum }_{j = 1}^{{N}_{S}} {K}_{G , i , j} \left[{λ}_{CS , i , j}-{λ}_{D , i , j}\right]$ ${G}_{0 , i}^{′} \left(t\right) = {\sum }_{j = 1}^{{N}_{S}} {K}_{G , i , j} \left[{λ}_{CS , i , j}^{′}\left(t\right)-{λ}_{D , i , j}\right]$ $Δ {G}_{0 , i} \left(t\right) = {G}_{0 , i}^{′} \left(t\right) - {G}_{0 , i}$ wherein *G*_{0,i} represents an initial mass of the i-th carbon-contact-strip structure when the i-th carbon-contact-strip structure is not worn, G'_{0,i}(t) represents a mass of the i-th carbon-contact-strip structure at time t, K_{G,ij} represents a contact-force coefficient of the j-th contact-force sensor of the i-th carbon-contact-strip structure, λ_{D,i,j} represents a wavelength value of the j-th contact-force sensor of the i-th carbon-contact-strip structure in a state without any force, λ_{CS,i,j} represents the wavelength value of the j-th contact-force sensor of the i-th carbon-contact-strip structure when the i-th carbon-contact-strip structure is not worn, λ'_{CS,i,j} represents the wavelength value of the j-th contact-force sensor of the i-th carbon-contact-strip at the time t, N_{S} represents the number of the contact-force sensors on the same carbon-contact-strip, i represents a serial number of the carbon-contact-strip structure, and j represents a serial number of the contact-force sensor of each carbon-contact-strip structure.

In some embodiments, the pressure signal is used to indicate a contact-force between the pantograph bow and a catenary line; and the contact-force between the pantograph bow and the catenary line is determined by the processor using following formula: ${F}_{S , i , j} \left(t\right) = {K}_{S , i , j} \left[{λ}_{i , j}\left(t\right)-{λ}_{0 , i , j}+{k}_{T , i , j}\left(T\left(t\right)-{T}_{0}\right)\right]$ ${F}_{cp} \left(t\right) = {\sum }_{i = 1}^{{N}_{C}} {\sum }_{j = 1}^{{N}_{S} = 2} {F}_{S , i , j} \left(t\right)$ wherein F_{S,i,j}(t) represents a value of the contact-force at time t between the catenary line and the contact-force sensor on the j-th bow support of the i-th carbon-contact-strip structure of the pantograph bow, K_{S,i,j} represents a contact-force coefficient of the j-th contact-force sensor of the i-th carbon-contact-strip structure, λ_{i,j}(t) represents a wavelength value of the j-th contact-force sensor of the i-th carbon-contact-strip structure at the time t, λ_{0,i,j} represents the wavelength value of the j-th contact-force sensor of the i-th carbon-contact-strip structure when there is no mutual force between the pantograph bow and the catenary line, k_{T,i,j} represents a temperature drift coefficient of the j-th contact-force sensor of the i-th carbon-contact-strip structure, T(t) represents a temperature value at the time t, T₀ represents an initial temperature value, F_{cp}(t) represents a value of the contact-force at the time t between the pantograph bow and the catenary line, Nc represents the number of the carbon-contact-strip structures on the pantograph bows, and N_{S} represents the number of the bow supports on the same carbon-contact-strip.

In some embodiments, the optical fiber sensor includes at least one accelerometer to collect acceleration signal, the pantograph includes one or more pantograph bows, wherein each pantograph bow includes a carbon-contact-strip, bow supports respectively connected to both ends of the carbon-contact-strip, and connecting parts for connecting the carbon-contact-strip and each bow support; for pantograph bows equipped with accelerometers, the accelerometers are installed in one or more of the following places: inside or on the surface of the bow supports, and on the connecting parts.

In some embodiments, the accelerometers are arranged in pairs; and the pair of accelerometers are respectively installed on the bow supports at both ends of the same pantograph bow, or, the pair of accelerometers are respectively installed on the connecting parts at both ends of the same pantograph bow.

In some embodiments, the bow supports and the accelerometers are in one-to-one correspondence, and a corresponding accelerometer is installed inside or on the surface of each bow support.

In some embodiments, the accelerometer is a three-axis optical fiber accelerometer.

In some embodiments, a current sensor is embedded in the accelerometer, or, the accelerometer is coupled with a current sensor.

In some embodiments, the acceleration signal is used to indicate an acceleration of at least one pantograph bow in a horizontal direction and an acceleration of at least one pantograph bow in a vertical direction; and a vertical vibration displacement and a horizontal vibration displacement of the pantograph bow are determined by the processor using following formulas: ${d}_{H} \left(t\right) = {d}_{0 , H} + {\int }_{0}^{t} \left[{ν}_{0 , H}+{\int }_{0}^{t} {a}_{H} \left(t\right) dt\right] dt$ ${d}_{V} \left(t\right) = {d}_{0 , V} + {\int }_{0}^{t} \left[{ν}_{0 , V}+{\int }_{0}^{t} {a}_{V} \left(t\right) dt\right] dt$ wherein d_{H}(t) represents a displacement value of the pantograph bow in the horizontal direction at time t, d_{0,H} represents an initial displacement value of the pantograph bow in the horizontal direction, v_{0,H} represents an initial velocity value of the pantograph bow in the horizontal direction, a_{H}(t) represents an acceleration value of the pantograph bow in the horizontal direction at the time t, d_{V}(t) represents a displacement value of the pantograph bow in the vertical direction at the time t, d_{0,V} represents an initial displacement value of the pantograph bow in the vertical direction, v_{0,V} represents an initial velocity of the pantograph bow in the vertical direction, and a_{V}(t) represents an acceleration value of the pantograph bow in the vertical direction at the time t.

In some embodiments, the optical fiber sensor further includes at least one contact-force sensor to collect pressure signal, and the pantograph includes one or more pantograph bows, wherein each pantograph bow includes bow supports; for a pantograph bow equipped with contact-force sensors, the contact-force sensor is installed inside or on the surface of the bow support; the pressure signal is used to indicate a contact-force between the pantograph bow and a catenary line; the acceleration signal is used to indicate an acceleration of at least one pantograph bow in a horizontal direction and an acceleration of at least one pantograph bow in a vertical direction; the processor uses following formulas to determine an acceleration value of the pantograph bow in the vertical direction and the contact-force between the pantograph bow and the catenary line: ${a}_{V} \left(t\right) = {K}_{V} \left[{λ}_{V}\left(t\right)-{λ}_{0 , V}+{k}_{T , V}\left(T\left(t\right)-{T}_{0}\right)\right]$ ${F}_{S} \left(t\right) = {K}_{S} \left[{λ}_{S}\left(t\right)-{λ}_{0 , S}+{k}_{T , S}\left(T\left(t\right)-{T}_{0}\right)\right]$ wherein a_{V}(t) represents an acceleration value of the pantograph bow in the vertical direction at time t, K_{V} represents an acceleration coefficient of the accelerometer in the vertical direction, λ_{V}(t) represents a wavelength value of the accelerometer in the vertical direction at the time t, λ_{0,V} represents a wavelength value of the accelerometer in the vertical direction in a static state, k_{T,V} represents a temperature drift coefficient of the accelerometer in the vertical direction, F_{S}(t) represents a contact-force value between a contact-force sensor and the catenary line at the time t, K_{S} represents a contact-force coefficient of the contact-force sensor, λ_{S}(t) represents a wavelength value of the contact-force sensor at the time t, λ_{0,S} is used to indicate the wavelength value of the contact-force sensor when there is no mutual force between the pantograph bow and the catenary line, k_{T,S} represents a temperature drift coefficient of the contact-force sensor, T(t) represents a temperature value T at the time t, and T₀ represents an initial temperature value.

In some embodiments, the optical fiber sensor further includes at least one contact-force sensor to collect pressure signal, and the pantograph includes one or more pantograph bows, wherein each pantograph bow includes bow supports; for a pantograph bow equipped with a contact-force sensor, the contact-force sensor is installed inside or on the surface of the bow support; the pressure signal is used to indicate a contact-force between the pantograph bow and the catenary line; the acceleration signal is used to indicate an acceleration of at least one pantograph bow in a longitudinal direction; the processor uses following formula to determine a stagger of the catenary line: ${Z}_{C} \left(t\right) = {L}_{S} \left(\frac{{F}_{S , i , gch} \left(t\right)}{{F}_{S , i , drg} \left(t\right) + {F}_{S , i , gch} \left(t\right)}-\frac{1}{2}\right) , i = 1 , 2 , 3 , 4$ or, ${Z}_{C} \left(t\right) = {L}_{S} \left(\frac{1}{2}-\frac{{F}_{S , i , drg} \left(t\right)}{{F}_{S , i , drg} \left(t\right) + {F}_{S , i , gch} \left(t\right)}\right) , i = 1 , 2 , 3 , 4$ ${ν}_{L} \left(t\right) = {ν}_{0 , L} + {\int }_{0}^{t} {a}_{L} \left(t\right) dt$ ${D}_{L} \left(t\right) = {D}_{0 , L} + {\int }_{0}^{t} {ν}_{L} \left(t\right) dt$ wherein, Z_{C}(t) represents the stagger of the catenary line at time t, Z_{C} is a negative value on a right side of a train's forward direction, Z_{C} is a positive value on a left side of the train's forward direction, L_{S} represents a distance between a center of the bow supports with a buffer or/and damping system at both ends of the same carbon-contact-strip, F_{S},i,drg and F_{S,}i,gch respectively represent contact-force values between the catenary line and the contact-force sensors installed on the right and left bow supports of the i-th carbon-contact-strip of the pantograph bow, v_{L}(t) represents a speed value of the pantograph bow in the longitudinal direction at the time t, v_{0,L} represents an initial velocity of the pantograph bow in the longitudinal direction, a_{L}(t) represents an acceleration value a_{L} of the pantograph bow in the longitudinal direction at the time t, D_{L}(t) represents a travel distance of the train at the time t, and D_{0,L} represents an initial travel distance of the train.

In some embodiments, the acceleration signal is used to indicate an acceleration of at least one pantograph bow in a vertical direction; thee processor uses following formula to determine a height of a catenary line: ${ν}_{V} \left(t\right) = {ν}_{0 , V} + {\int }_{0}^{t} {a}_{V} \left(t\right) dt$ ${h}_{C} \left(t\right) = {h}_{Tr} + {h}_{cp , 0} \left({P}_{A , 0}\right) + {\int }_{0}^{t} {ν}_{V} \left(t\right) dt$ wherein v_{V}(t) represents a velocity value of the pantograph bow in the vertical direction at time t, v_{0,V} represents an initial velocity value of the pantograph bow in the vertical direction, a_{V}(t) represents an acceleration value of the pantograph bow in the vertical direction at the time t, h_{C}(t) represents a height of the catenary line at the time t, h_{Tr} represents a height of a roof of a carriage in which the pantograph is located relative to a ground plane, h_{cp,0}(P_{A,0}) represents a height of an upper surface of the carbon-contact-strip of the pantograph bow relative to the roof when a pressure value of an air bellow/cylinder is P_{A,0}, P_{A,0} represents the pressure value of the air bellow/cylinder in a static bow-up state when the contact-force between the pantograph bow and the catenary line is required for normal current flow.

In some embodiments, the optical fiber sensor includes at least one temperature sensor to collect temperature signal, and the pantograph includes one or more pantograph bows, wherein each pantograph bow includes a carbon-contact-strip, bow supports respectively connected to both ends of the carbon-contact-strip and connecting parts for connecting the carbon-contact-strip and each bow support; for pantograph bows equipped with temperature sensors, the temperature sensors are installed in one or more of the following places: inside or on the surface of the bow supports and on the connecting parts.

In some embodiments, the optical fiber sensor includes at least one current sensor to collect current signal, the pantograph includes one or more pantograph bows, wherein each pantograph bow includes a carbon-contact-strip, bow supports respectively connected to both ends of the carbon-contact-strip and the connecting parts, and connecting parts for connecting the carbon-contact-strip and each bow supports; for pantograph bows equipped with current sensors, the current sensors are installed in one or more of the following places: inside or on the surface of the bow supports and on the connecting parts.

In some embodiments, the optical fiber sensor includes at least one load sensor to collect load signal, and the pantograph includes a four-bar linkage structure; and the load sensors are installed on one or more of the following places: an upper arm of the four-bar linkage structure, a lower arm of the four-bar linkage structure, and a pull rod of the four-bar linkage structure.

In some embodiments, a temperature sensor is embedded in the load sensor, or, the load sensor is coupled with a temperature sensor.

In some embodiments, the load sensors are installed on the same section circumference of any section of the pull rod, and the load signal is used to indicate a tension of the pull rod; the processor uses the following formula to determine a tension value of the pull rod: ${F}_{pf} \left(t\right) = {\sum }_{n = 1}^{N} {K}_{pf , n} \left\{{λ}_{n}\left(t\right)-{λ}_{0 , n}+{k}_{T , n}\left[T\left(t\right)-{T}_{0}\right]\right\}$ wherein F_{pf}(t) represents the tension value of the pull rod at time t, N represents the total number of load sensors on the same cross-section of the pull rod, K_{pf,n} represents a tension coefficient of the n-th optical fiber load sensor, λₙ(t) represents a wavelength value of the n-th load sensor at the time t, λ_{0,n} represents the wavelength value of the n-th optical fiber load sensor when there is no load, k_{T,n} represents a temperature drift coefficient of the n-th optical fiber load sensor, T(t)) represents a temperature value at the time t, and T₀ represents the temperature value at the initial moment.

In some embodiments, the load sensors are installed in pairs on the same section circumference of any section of the pull rod, and the pair of load sensors are centrally symmetrical, and the load signal is used to indicate a bending moment of the pull rod; the processor uses the following formula to determine a bending moment value of the pull rod: ${M}_{i , i - opp} \left(t\right) = {K}_{M , i} \left\{{λ}_{i}\left(t\right)-{λ}_{0 , i}+{k}_{T , i}\left[T\left(t\right)-{T}_{0}\right]\right\} - {K}_{M - opp , i - opp} \left\{{λ}_{opp , i - opp}\left(t\right)-{λ}_{0 - opp , i - opp}+{k}_{T - opp , i - opp}\left[T\left(t\right)-{T}_{0}\right]\right\}$ wherein $i = 1 , 2 , 3 , ⋯ , I , I = \frac{N}{2} ;$ wherein M_{i,i-opp}(t) represents the bending moment value at the time t in an i,i-opp bending direction of the pull rod, N represents the total number of load sensors on the same cross-section of the pull rod, I represents the number of pairs of two load sensors on the same cross-section of the pull-rod, K_{M,i} represents a bending moment coefficient of the i-th load sensor of the pull rod, λᵢ(t) represents a wavelength value of the i-th optical fiber load sensor at the time t, λ_{0,i} represents the wavelength value of the i-th optical fiber load sensor when there is no load, k_{T,i} represents a temperature drift coefficient of the i-th optical fiber load sensor, K_{M-opp,i-opp} represents the bending moment coefficient of the optical fiber load sensor facing the i-th optical fiber load sensor of the pull-rod, λ_{opp,i-opp}(t) represents a wavelength value of the i-th optical fiber load sensor facing the i-th optical fiber load sensor at the time t, λ_{0-opp,i-opp} represents the wavelength value of the i-th optical fiber load sensor facing the i-th optical fiber load sensor when there is no load, k_{T-opp,i-opp} represents a temperature drift coefficient of the i-th optical fiber load sensor facing the i-th optical fiber load sensor, T(t) represents a temperature value at the time t, and represents the temperature value at the initial moment.

In some embodiments, the optical fiber sensor includes at least one strain sensor to collect deformation signal, and the pantograph includes a four-bar linkage structure and a base frame; and the strain sensors are installed on one or more of the following places: an upper arm of the four-bar linkage structure, a lower arm of the four-bar linkage structure, and a pull rod of the four-bar linkage structure, and a base frame.

In some embodiments, the optical fiber sensor includes at least one air pressure sensor to collect air pressure signal, and the pantograph includes an air bellow and/or an air cylinder, a pneumatic control box, and an gas pipeline connecting the pneumatic control box; the air pressure sensor is installed on one or more of the following places: the air bellow and/or the air cylinder, an inside or a surface of the pneumatic control box, or coupled with the gas pipeline.

In some embodiments, a temperature sensor is embedded in the air pressure sensor, or the air pressure sensor is coupled with a temperature sensor.

In some embodiments, the air pressure signal is used to indicate the air pressure value in the air bellow or air cylinder of the pantograph; the processor uses the following formula to determine an air pressure value in the air bellow or air cylinder of the pantograph: ${P}_{A} \left(t\right) = {K}_{A} \left[λ\left(t\right)-{λ}_{0}+{k}_{T}\left(T\left(t\right)-{T}_{0}\right)\right]$ wherein P_{A}(t) represents a pressure value of the air bellow/air cylinder at the time t, K_{A} represents a pressure coefficient of the air pressure sensor, λ(t) represents a wavelength value of the air pressure sensor at the time t, λ₀ represents the wavelength value of the air pressure sensor when air bellow/air cylinder is not inflated, k_{T} represents a temperature drift coefficient of the air pressure sensor, T(t) represents a temperature value at the time t, and T₀ represents the temperature value at the initial moment.

In some embodiments, the pantograph is selected from a group including a spring-barrel-type pantograph, a leaf-spring-type pantograph, and a tension-spring-type pantograph.

In some embodiments, the optical fiber sensors are installed by screw fastening, embedding, welding, pasting or implanting.

In some embodiments, the processor includes an FPGA and a multi-channel analog-to-digital conversion module; wherein the FPGA is configured to control the multi-channel analog-to-digital conversion module to complete analog-digital signal conversion and spectrum analysis, and to output a wavelength value of each optical fiber sensor.

Another embodiment of the present disclosure provides an optical fiber sensor, configured to receive laser signal, including: an optical interference cavity, wherein the laser signal forms a comb-shaped spectrum after entering the optical interference cavity, and a cavity length of the optical interference cavity satisfies following formula: $\frac{{k}_{mid}}{2} \left({λ}_{ctr}-\frac{{W}_{laser}}{2}\right) < {l}_{FP} < \frac{{k}_{mid}}{2} \left({λ}_{ctr}+\frac{{W}_{laser}}{2}\right)$ ${W}_{laser} \leq \frac{2 {l}_{FP}}{{k}_{mid}^{2} - 1}$
wherein *l_{FP}* is represents the cavity length of the optical interference cavity; *k_{mid}* represents a preset longitudinal modulus of the optical fiber sensor, *k_{mid}* is a positive integer, and *k_{mid}* ≥2, *Wₗₐₛₑᵣ* represents a bandwidth of a laser emitting the laser signal, and *λ_{ctr}* represents a wavelength value of a center point of the bandwidth of the laser;
wherein the optical interference cavity includes two mirrors respectively disposed at both ends of the optical interference cavity, and the cavity length of the optical interference cavity is a distance between the two mirrors.

In some embodiments, the cavity length of the optical interference cavity satisfies following formula: ${l}_{ctr} = {k}_{mid} \frac{{λ}_{ctr}}{2}$ wherein *l_{ctr}* is used to indicate the cavity length of the optical interference cavity.

Compared with the prior art, the technical solution of the embodiment of the present disclosure has the following beneficial effects:
In the embodiment of the present disclosure, according to the bandwidth of the laser emitting the laser signal, the wavelength value of the center point of the bandwidth of the laser, and the preset longitudinal modulus of the optical fiber sensor, the cavity length of the optical interference cavity can be determined by a formula, so that only a single peak in the comb-shaped spectrum output from the optical interference cavity is located within the bandwidth of the laser, so that the signal interference of adjacent peaks to the wave peak in the bandwidth of the laser is avoided during process of the data analysis, and cross-code is effectively prevented. Further, based on the above-mentioned cavity length limitation, it is possible to form a small-size and small-volume optical fiber sensor, which is beneficial to make the manufactured sensor chip keep the basis of maintaining good parameter consistency, high sensitivity, large dynamic range, good linearity, stable performance, strong reliability and other advantages, it has a compact structure and lighter weight, which is helpful for installation on the roof or inside of vehicles, such as electric passenger-bus. Compared with the electronic sensors in the prior art, due to the large size and heavy weight, it cannot be installed on electric passenger-bus, but can only be installed on inspection vehicles, engineering vehicles or freight locomotives. The technical solutions in the embodiments of the present disclosure not only avoid affecting the normal operation of the pantograph, but also the monitoring system for a pantograph can realize multi-directional monitoring, real-time accurate collection, analysis, and feedback of operating parameters related to the pantograph, catenary line, and pantograph-catenary relationship.

Further, by setting the cavity length of the optical interference cavity to satisfy the cavity length formula, it is possible to make the comb-shaped spectrum output from the optical interference cavity not only have a single peak in the bandwidth of the laser, but also the single peak in the center position of the bandwidth of the laser, so that it is easier to avoid the signal interference of wave adjacent peaks to the wave peak in the bandwidth of the laser during process of the data analysis, and further effectively prevent cross-code. Further, when the wave peak is located in the center of the bandwidth of the laser, the full optical bandwidth measurement of the laser can be achieved.

Further, the optical fiber sensor is a passive sensor. By adopting the passive sensor, the passive detection can be realized when the detection terminal is not charged, which effectively improves the anti-electromagnetic ability, and helps to avoid the danger to the passengers in the passenger carriage due to the power supply. It will not cause electrification accidents, avoid interference caused by detection, ensure normal monitoring and improve detection accuracy.

Further, for pantograph bow equipped with contact-force sensors, by installing at least one contact-force sensor inside or on the surface of the bow support, there is an opportunity to monitor the hard point of the catenary line, the stagger value, the contact-force between the pantograph and the catenary line, the impact and the arcing.

Further, the contact-force sensors are arranged in pairs, and the paired contact-force sensors are respectively installed on the bow supports at both ends of the same pantograph bow, and have the opportunity to monitor the contact-force between the pantograph and the catenary line, the wear of the carbon-contact-strip of the pantograph, the wear area and the eccentric wear.

Further, the bow supports correspond to the contact-force sensors one-to-one, and the corresponding contact-force sensors are installed inside or on the surface of each bow support, which can monitor all pantograph bows and avoid hidden dangers left due to missed inspections.

Further, for pantograph bows equipped with accelerometers, the accelerometers are installed at one or more of the following places: the inside or the surface of the bow support, and on the connecting parts, there is an opportunity to monitor the hard points of the catenary line, the impacts and high conduction values, as well as distinguish effectively between flexible catenary and rigid catenary.

Further, the accelerometers are arranged in pairs, wherein, the paired accelerometers are respectively installed on the bow supports at both ends of the same pantograph bow, or the paired accelerometers are respectively installed in the connecting parts at the two ends of same pantograph bow. The acceleration signals at both ends of the same pantograph bow can also be used to effectively monitor the stability of the pantograph bow.

Further, for the pantograph bows equipped with the temperature sensors, the temperature sensors are installed at one or more of the following places: the inside or surface of the bow support, and on the connecting parts, there is an opportunity to monitor the arcing between the pantograph and the catenary line, based on the temperature signal.

Further, for the pantograph bows equipped with the current sensors, the current sensors are installed at one or more of the following places: the inside or surface of the bow support, and on the connecting parts, there is an opportunity to monitor the arcing between the pantograph and the catenary line, based on the current signal.

Further, the load sensors are installed at one or more of the following places of the four-bar linkage structure: the upper arm, the lower arm, and the pull rod, which can monitor the tension and bending moment of the upper arm, the lower arm, and the pull rod. The load sensor of the pull rod can also be used to monitor the jamming of the connecting shaft at both ends of the pull rod.

Further, strain sensors are installed in one or more of the following places: the upper arm of the four-bar linkage structure, the lower arm of the four-bar linkage structure, the pull rod of the four-bar linkage structure, and the base frame. There is an opportunity to monitor the fatigue of the upper arm of the four-bar linkage structure, of the lower arm of the four-bar linkage structure, of the pull rod of the four-bar linkage structure, and of the base frame.

Further, the air pressure sensor is installed in one or more of the following places: the air bellow and/or the air cylinder, the inside or the surface of the pneumatic control box, and the coupled gas pipeline, and there is an opportunity to monitor the air pressure of the air bellow or air cylinder of the pantograph, and monitor the failure of the lifting or lowering the pantograph bow, based on the air pressure signal.

Further, the processor includes an FPGA and a multi-channel analog-to-digital conversion module; wherein, the FPGA is used to control the multi-channel analog-to-digital conversion module to complete analog-digital signal conversion and spectral analysis, and output the wavelength value of each optical fiber sensor. Compared to the use of a digital signal processor to collect and process the signal, DSP can only be applied to the multi-conditional process and multi-algorithm task under the system's lower sampling rate or low data rate. The FPGA can be used to collect and process the high data rate signals which are difficult for DSP to handle, such as Gbps signals or even higher data rates, which can better collect and process the massive sampling data at the same time caused by the simultaneous scanning of multi-channels generated by high-speed scanning lasers in real time, and the wavelength value can be output directly. Wherein, the wavelength value is the wavelength value when the light intensity of the comb-shaped spectrum output by the optical fiber sensor is the maximum within the bandwidth of the laser, because there is only a single peak in the comb-shaped spectrum output by the optical fiber sensor in the present application. Therefore, only the wavelength value at the maximum intensity of a single light is used for output.

### BRIEF DESCRIPTION OF THE DRAWINGS

Figure 1 is a schematic diagram of the structure of the monitoring system for a pantograph in an embodiment of the present disclosure;
Figure 2 is a schematic diagram of the structure of an optical interference cavity in an optical fiber sensor in an embodiment of the present disclosure;
Figure 3 is a schematic diagram of a spectrum output from an optical interference cavity in an embodiment of the present disclosure;
Figure 4 is a schematic diagram of the installation position of the optical fiber sensors of the monitoring system for the pantograph in an embodiment of the present disclosure;
Figure 5 is a schematic diagram of the changing of the wear amount of a carbon-contact-strip with the time in an embodiment of the present disclosure;
Figure 6 is a time-domain schematic diagram of a pantograph bow sensing the contact-force between the pantograph and the catenary line while the passenger carriage running in an embodiment of the present disclosure;
Figure 7 is a time-domain schematic diagram of the contact-force between the pantograph and the catenary line sensed by the contact-force sensors located at both ends of the same carbon-contact-strip while the passenger carriage running in the embodiment of the present disclosure;
Figure 8 is a time-domain schematic diagram of the vertical acceleration value of the pantograph bow sensed by an accelerometer located on the pantograph bow while the passenger carriage running in an embodiment of the present disclosure;
Figure 9 is a time domain schematic diagram of the changing of the stagger value of the catenary line while the passenger carriage running in an embodiment of the present disclosure;
Figure 10 is a time-domain schematic diagram of the height value of the catenary line while the passenger carriage running in an embodiment of the present disclosure;
Figure 11 is a schematic diagram of the structure of a four-bar linkage structure in an embodiment of the present disclosure;
Figure 12 is a schematic diagram of the position of load sensors on the same circumferential section of the pull rod in an embodiment of the present disclosure;
Figure 13 is a schematic diagram of the principle of an optical fiber sensing analyzer of the monitoring system for a pantograph in an embodiment of the present disclosure.

### DETAILED DESCRIPTION

As mentioned above, the working state of the pantograph, the working state of the catenary line, and the current-receiving relationship between the pantograph and the catenary line are the top priorities for the safety of vehicle operation, and effective monitoring is urgently needed. Specifically, it can be derived from the following contents:
a. Regarding the working status of the pantograph: when a vehicle, such as an electric passenger carriage, is running, if the center of gravity of the pantograph bow is unbalanced or the rotation is not flexible, it will cause eccentric wear of the carbon-contact-strip on the pantograph; if the hinge system composed of the bearings at both ends of the pull rod is stuck, the mechanism of the four-bar linkage structure of the pantograph will lose the function of dynamically adjusting the height and balance of the pantograph bow, and there is a risk of the pull rod breaking; if the air bellow or the air cylinder of the pantograph appears phenomena such as blockage or escape of the gas path, which will cause the pantograph to be unable to be raised or lowered, or unable to maintain the height of current receiving after being raised. These will cause the abnormal contact-force between the pantograph and the catenary line, the excessive wear on the surface of the carbon-contact-strip and the catenary line, or the arcing between the pantograph and the catenary line.
b. Regarding the working status of the catenary line: when a vehicle, such as an electric passenger carriage, is running, the pantograph and the catenary line are in contact at all times, so the pantograph in high-speed motion will cause the catenary line to fluctuate, and form a dynamic stagger value and the height value of the catenary line. If the geometric parameters such as the stagger value and the height value of the catenary line exceed the design error on the vehicle running route, it may cause the abnormal wear of the carbon-contact-strip on the pantograph, or even cause the catenary line to be in contact with the horn area of the pantograph, which is deviated from the carbon-contact-strip, and there is a danger of the pantograph scraping. In addition, the unevenness of the catenary line and the hard points of the catenary line caused by the arcing will severely impact the pantograph working on the current receiving on the running vehicle, which may cause at least the carbon-contact-strip on the pantograph to burn and to peel, or cause more severely the pantograph to lose balance, even to fall off the roof after being hit.
c. Regarding the relationship between the pantograph and the catenary line: when a vehicle, such as an electric passenger carriage, is running at high speed, if the contact-force between the pantograph and the catenary line is too high, it will cause the pantograph to pull off the catenary line, or cause the catenary line to hit the pantograph; if the contact-force is too small, the quality of the current receiving of the pantograph will be poor, and even the arcing will occur between the pantograph and the catenary line. Therefore, when the train is running, there must be a reasonable contact-force between the pantograph and the catenary line, so that the pantograph can safely introduce the current from the catenary into the traction converter system in the carriage body, so as to provide continuous and effective power for the vehicle.

However, in the existing monitoring technology, there are problems such as low accuracy and high error rate, which easily affects the normal operation of the pantograph.

Specifically, with the popularization of subway unmanned driving technology in recent years and the rapid increase in passenger flow density, the traditional operation and maintenance mode based on manual inspection can no longer meet the real-time and safety requirements. Therefore, the rail transit industry has gradually intensified the research on the factors affecting the operation of the pantograph and catenary line. At the same time, with the continuous development of visual imaging technology, industrial cameras have been widely used in the field of the operation measurement of pantograph and catenary line on vehicle, and the machine vision of monitoring system for pantograph and catenary line has become the current mainstream technology, which can perform the non-contact measurement of operating parameters such as catenary line geometric parameters and pantograph-catenary arcing. This type of technology has a certain monitoring effect, but there are still considerable limitations in terms of application value and promotion benefits.

The inventors of the present disclosure have discovered through research that, firstly, visual imaging is a non-contact measurement, which cannot effectively detect and feedback the dynamic characteristics of the pantograph, such as the hard point of the catenary line, the contact force etc.; and cannot detect in real time the damage of the pantograph , the component failures, and the abnormal operation etc. ; cannot effectively measure the wear of the carbon-contact-strip and the eccentric wear of the front and rear carbon-contact-strip, etc.. For most of the operating parameters of the pantograph and the relationship between the pantograph and the catenary-line, visual imaging is only used for post-event video review.

Secondly, the installation of the visual imaging system for monitoring the pantograph has special requirements for the vehicle model, roof space layout, and interior cabinets. The installation will involve a lot of design contact and drawing, which will increase the cost of carriage body transformation. At the same time, to achieve real-time video analysis and alarm for important operating parameters, it is necessary to rely on high-cost hardware configuration and complex machine vision algorithms. At present, there are limited professional research talents in this field in China, and there are still many technical and application bottlenecks to breakthrough.

Finally, most of the core components of the visual sensor in the pantograph monitoring system built by industrial cameras rely on imports, which are expensive and quick to upgrade, and the service life and failure rate of electrical components often fail to meet the requirements for safe operation and cost of maintenance of rail transit vehicles.. And in order to ensure the shooting effect, fine daily maintenance is required in the later stage.

In summary, from the comprehensive consideration of procurement costs, operation and maintenance costs, and actual monitoring results, the use of visual imaging methods to monitor the operation of the system of pantograph-catenary is cost-effective and lacks accuracy.

On passenger line inspection vehicles and freight line locomotives, electronic sensors are installed on the pantograph, and geometric parameters such as the contact force between the pantograph and the catenary line, the stagger value and the height value of the catenary line, etc., are obtained through contact measurement. Compared with the machine vision of the pantograph monitoring system, it collects more complete operating parameters of the catenary line and the relationship between the pantograph and the catenary line, but it cannot collect any parameters of the pantograph itself. Therefore, it has not been widely applied to passenger vehicles. This is due to the following main reasons:
a. Electronic sensors are severely affected by electromagnetic interference, which brings great difficulties to the accurate analysis of subsequent data;
b. Electronic sensors are not tailor-made for the pantograph, and the normal operation of the pantograph may be affected due to size, volume, weight and other reasons;
c. The performance stability and service life of electronic sensors do not meet the requirements of the monitoring and operation management of vehicle operation life cycle;
d. The signal transmission cables of electronic sensors have potential safety hazards. Improper installation and wiring techniques or mechanical damage from external forces can cause serious electrical insulation accidents, and even introduce high voltage on the roof of the carriage to pose a threat to personal safety.

Refer to Table 1, Table 1 is a comparison table of the measurement effects of electronic sensors and machine vision sensors.

**Table 1**

| Compare items | | Electronic sensor | Camera system |
|---|---|---|---|
| Types of vehicles that can be installed | | Cannot be installed on electric passenger carriages, but can only be installed on inspection vehicles, engineering vehicles or freight locomotives | Can be installed on electric passenger carriages, inspection vehicles, engineering vehicles or locomotives |
| | Hard point of catenary line | No | No |
| | Stagger of catenary | Yes | Yes, visible and infrared light cameras |
| | Height of catenary | Yes | No |
| | Distinguish between flexible catenary and rigid catenary | Yes | Yes, manual distinction |
| Monito ring item | Impact between the pantograph and catenary line | No | No |
| | Acting between the pantograph and catenary line | No | Yes, UV camera |
| | Contact-force between the pantograph and catenary line | No | No |
| | Wear value of the carbon-contact-strip | No | Yes, complex algorithm |
| | Eccentric wear of the carbon-contact-strip | No | No |
| | Stability of the pantograph bow | No | No |
| | Pull force of the pull-rod | No | No |
| | Bending moment of the pull-rod | No | No |
| | If the ball hinges at both ends of the pull-rod are stuck or not | No | No |
| | Air bellow/cylinder pressure | Yes | No |
| | Failure of raising or lowering pantograph | No | No |
| Installa tion item | Sensor package size | Big | Very big |
| | Sensor integration method | Cannot be embedded and integrated, and can only be externally placed on the pantograph. The large size of the sensor causes the pantograph height to exceed the limit. | Cannot be integrated into the pantograph |
| | Whether to change the structure of the pantograph | Yes | No |
| | Whether to do insulation treatment | Active sensor, need to be insulated | The camera is powered and needs to be insulated |
| | Whether to take up space on the roof of the carriage | Need to take up a lot of space on the roof, and the insulation device designed for the sensors on the roof weighs 20-30kg | Need to occupy a very large space on the roof of the carriage, because various types of cameras and lighting devices need to be placed, so the roof structure needs to be changed, that is, the roof of the carriage should be sunk or/and digging |
| Summarize | | a. The sensor is an active device and needs power supply, so protection measures are needed for anti-electromagnetic interference and lightning protection; | a. Entering and exiting the tunnel, it is difficult to identify the flickering scene; |
| | | | b. It is difficult to identify lines with huge backgrounds in the four seasons; |
| | | b. The sensor size is large; | c. The recognition algorithm is more complicated; |
| | | c. The structure of the pantograph must be changed before, sensors can be integrated onto the pantograph; | |
| | | | d. The roof structure is changed, and the occupied area is large, which increases the weight of the roof; |
| | | d. Active detection requires insulation treatment, and takes up space on the roof of the carriage, adding weight to the roof; | |
| | | | e. Subject to electromagnetic interference; |
| | | | f. In most cases, it can only be used as a video playback postscript function. |
| | | e. The signal is not necessarily pure, there is interference and noise; | |
| | | f. Not resistant to impact and short life. | |

According to Table 1, the safe operation of vehicles requires a feasible monitoring technology and smart operation and maintenance solutions to solve the bottleneck in the application value and promotion benefits of the pantograph-catenary monitoring system.

In an embodiment of the present disclosure, a monitoring system includes one or more optical fiber sensors installed on the pantograph for receiving laser signals; a processor, coupled to the optical fiber sensors, and used to process the signals collected by the optical fiber sensors; wherein, the optical fiber sensor has an optical interference cavity, the laser signal enters the optical interference cavity to form a comb-shaped spectrum, and the cavity length of the optical interference cavity satisfies the preset formula, and the optical interference cavity includes mirrors located at both ends of the cavity, and the cavity length of the optical interference cavity is the distance between the two mirrors.

With the above solution, according to the bandwidth of the laser emitting the laser signal, the wavelength value of the center point of the bandwidth of the laser, and the preset longitudinal modulus of the optical fiber sensor, the cavity length of the optical interference cavity can be determined by a formula, so that only a single peak in the comb-shaped spectrum output from the optical interference cavity is located within the bandwidth of the laser, so that the signal interference of adjacent peaks to the wave peak in the bandwidth of the laser is avoided during process of the data analysis, and cross-code is effectively prevented. Further, based on the above-mentioned cavity length limitation, it is possible to form a small-size and small-volume optical fiber sensor, which is beneficial to make the manufactured sensor chip keep the basis of maintaining good parameter consistency, high sensitivity, large dynamic range, good linearity, stable performance, strong reliability and other advantages, it has a compact structure and lighter weight, which is helpful for installation on the roof or inside of vehicles, such as electric passenger-bus. Compared with the electronic sensors in the prior art, due to the large size and heavy weight, it cannot be installed on electric passenger-bus, but can only be installed on inspection vehicles, engineering vehicles or freight locomotives. The technical solutions in the embodiments of the present disclosure not only avoid affecting the normal operation of the pantograph, but also the monitoring system for a pantograph can realize multi-directional monitoring, real-time accurate collection, analysis, and feedback of operating parameters related to the pantograph, catenary line, and pantograph-catenary relationship.

In order to make the above objectives, features and beneficial effects of the present disclosure more obvious and understandable, specific embodiments of the present disclosure will be described in detail below with reference to the accompanying drawings.

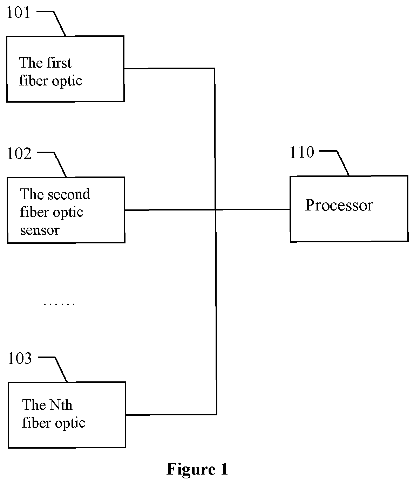

Referring to Figure 1, Figure 1 is a schematic structural diagram of a pantograph monitoring system in an embodiment of the present disclosure. The pantograph monitoring system may include a first optical fiber sensor 101, a second optical fiber sensor 102 to an Nth optical fiber sensor 103, and may also include a processor 110.

Wherein, the first optical fiber sensor 101, the second optical fiber sensor 102 to the Nth optical fiber sensor 103 may be installed on the pantograph.

The processor 110 may be coupled to the first optical fiber sensor 101, the second optical fiber sensor 102 to the Nth optical fiber sensor 103, and the processor 110 is configured to process signals collected by the optical fiber sensor.

It should be pointed out that the processor 110 may also include a signal demodulation module (not shown), which demodulates the first optical fiber sensor 101, the second optical fiber sensor 102 to the Nth optical fiber sensor 103.

Wherein, the processor may be a central processing unit (CPU), and the processor may also be other general-purpose processors, digital signal processors (DSP), and application specific integrated circuits (ASIC), field programmable gate array (FPGA) or other programmable logic devices, discrete gates or transistor logic devices, discrete hardware components, etc. The general-purpose processor may be a microprocessor or the processor may also be any conventional processor or the like.

Wherein, the optical fiber sensor may have an optical interference cavity, the laser signal forms a comb-shaped spectrum after entering the optical interference cavity, and the cavity length of the optical interference cavity satisfies the following formula: $\frac{{k}_{mid}}{2} \left({λ}_{ctr}-\frac{{W}_{laser}}{2}\right) < {l}_{FP} < \frac{{k}_{mid}}{2} \left({λ}_{ctr}+\frac{{W}_{laser}}{2}\right)$ ${W}_{laser} \leq \frac{2 {l}_{FP}}{{k}_{mid}^{2} - 1}$

Wherein, *l_{FP}* is used to represent the cavity length of the optical interference cavity; *k_{mid}* is used to represent the preset longitudinal modulus of the optical fiber sensor, the value range of *k_{mid}* is a positive integer, and *k_{mid}* >2; *Wₗₐₛₑᵣ* is used to represent the bandwidth of the laser emitting the laser signal, *λ_{ctr}*, is used to indicate the wavelength value of the center point of the bandwidth of the laser; the optical interference cavity includes mirrors located at both ends of the cavity, and the cavity length of the optical interference cavity is the distance between the two mirrors.

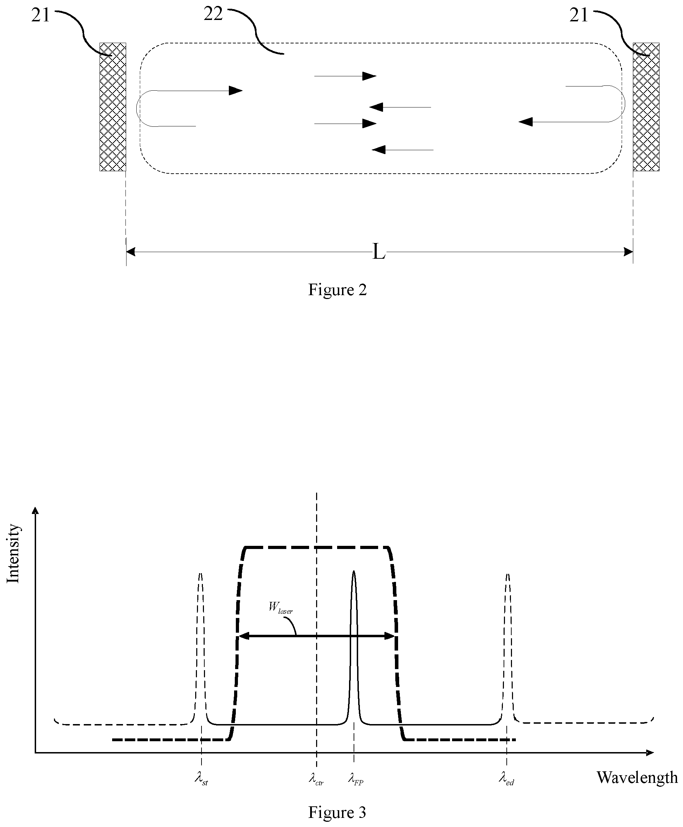

With reference to Figure 2 and Figure 3, Figure 2 is a schematic structural diagram of an optical interference cavity in an optical fiber sensor in an embodiment of the present disclosure, and Figure 3 is a schematic diagram of a spectrum output from an optical interference cavity in an embodiment of the present disclosure.

It is understandable that when a light wave enters the optical interference cavity, the incident light wave and the reflected light wave interfere, and after multiple reciprocating reflections on the cavity mirrors at both ends, multiple light beams will interfere to form a standing wave.

The optical interference cavity as shown in Figure 2 may include a mirror 21 and a cavity 22, where the mirrors 21 are located at both ends of the cavity, and light waves are reflected back and forth through the mirrors 21 to provide light energy feedback.

The cavity length of the optical interference cavity is the distance L between the two mirrors.

In a specific implementation of the embodiment of the present disclosure, the optical fiber sensor may include a detection head, and the detection head contains one or more optical interference cavities.

In the spectrum diagram shown in Figure 3, the spectrum of the transmitted light or the cepstrum of the reflected light of the optical interference cavity will form a comb-shaped spectrum with a certain peak-to-peak distance, and the distance between the two adjacent peaks is called the peak-to-peak distance.

Wherein, the spectrum output from the optical interference cavity may be the cepstrum of the transmission spectrum or the reflection spectrum, specifically, the spectrum output from the other side of the light source input side of the optical interference cavity after transmission is a transmission spectrum (as shown on the right side without arrow in Figure 2), and the transmission spectrum is a comb-shaped spectrum with a certain peak-to-peak distance shown in Figure 3, then the transmission spectrum can be directly analyzed; the spectrum output from the light source input side of the optical interference cavity after reflection is the reflection spectrum (as shown in Figure 2 on the left side of the arrow), and the reflection spectrum can be calculated as the cepstrum, the cepstrum is a comb-shaped spectrum with a certain peak-to-peak distance shown in Figure 3, and the cepstrum is further analyzed.

It should be pointed out that the laser emitting the laser signal may be a wavelength scanning laser, and the laser may have a fixed scanning bandwidth. Take a laser with a bandwidth of 40 nm as an example, the output wavelength is continuously scanned in the range of 1520nm to 1560nm, and a peak signal in the range of 1520nm to 1560nm is scanned in the comb-shaped spectrum.

Wherein, the bandwidth of the laser may also be referred to as optical bandwidth, scanning bandwidth or working bandwidth, and the width of the bandwidth may be determined according to the full width at half maximum (FWHM).

It can be calculated from the above that the bandwidth of the laser is 1560nm-1520nm=40nm, and the wavelength of the center point of the bandwidth of the laser is (1520nm+1560nm)/2=1540nm.

It should be pointed out that in the application scenarios of pantograph, the collected sensor signals often have the characteristics of extremely rapid changes. For example, the values of parameters such as the impact between the pantograph and the catenary line, and the contact-force are all changing rapidly. For this kind of fast variable parameters in this case, the string code problem appears to be particularly serious, resulting in a decrease in the accuracy of the analysis result.

**In** the embodiment of the present disclosure, in order to reduce the cross-code, it can be set that only a single peak in the spectrum output from the optical interference cavity is located within the bandwidth of the laser. As shown in Figure 3, there is only a single peak in the scanning bandwidth.. Furthermore, in order to realize that only a single peak in the spectrum output from the optical interference cavity is located within the bandwidth of the laser, when the scanning bandwidth has been determined, the cavity length of the optical interference cavity can be limited.

Specifically, the following steps may be used to calculate the cavity length of the optical interference cavity in the embodiment of the present disclosure.

First, according to the spectrum output from the optical interference cavity, there is only a single peak within the bandwidth of the laser, and the following formula is used to calculate *l_{FP}* corresponding to different *k_{mid}.* ${λ}_{ctr} - \frac{{W}_{laser}}{2} < {λ}_{FP} < {λ}_{ctr} + \frac{{W}_{laser}}{2}$ ${λ}_{ctr} - \frac{{W}_{laser}}{2} < 2 \frac{{l}_{FP}}{{k}_{mid}} < {λ}_{ctr} + \frac{{W}_{laser}}{2}$ $\frac{{k}_{mid}}{2} \left({λ}_{ctr}-\frac{{W}_{laser}}{2}\right) < {l}_{FP} < \frac{{k}_{mid}}{2} \left({λ}_{ctr}+\frac{{W}_{laser}}{2}\right)$

Wherein, *l_{FP}* is used to represent the cavity length of the optical interference cavity, *k_{mid}* is used to represent the preset longitudinal modulus of the optical fiber sensor, the value range of *k_{mid}* is a positive integer, and *k_{mid}* ≥2, and *Wₗₐₛₑᵣ* is used to represent the bandwidth of the laser emitting the laser signal, *λ_{ctr}* is used to indicate the wavelength value of the center point of the bandwidth of the laser.

*λ_{FP}* is used to indicate the wavelength value of the peak in the bandwidth of the laser, that is, the wavelength value of the comb-shaped spectrum output by the optical fiber sensor at the maximum light intensity in the bandwidth of the laser. It is understandable that, since only a single peak in the comb-shaped spectrum output by the optical fiber sensor in the present application is located within the bandwidth of the laser, there is only a single wavelength value when the light intensity is maximum.

Secondly, based on the fact that the adjacent peaks cannot be located within the bandwidth of the laser, the following formula is used to exclude inappropriate *k_{mid}* and its corresponding *l_{FP}.* ${l}_{FP} = {k}_{st} \frac{{λ}_{st}}{2} = {k}_{mid} \frac{{λ}_{FP}}{2} = {k}_{ed} \frac{{λ}_{ed}}{2}$ $Δ {λ}_{ed - st} = \left|{λ}_{ed}-{λ}_{st}\right| = \left|\frac{2 {l}_{FP}}{{k}_{ed}}-\frac{2 {l}_{FP}}{{k}_{st}}\right| = \left|2{l}_{FP}\left(\frac{{k}_{st} - {k}_{ed}}{{k}_{ed} {k}_{st}}\right)\right|$ then *kₛₜ = k_{mid} + 1, k_{ed} = k_{mid}* - 1 , putting them into the above formula, a new formula is gotten: $Δ {λ}_{ed - st} = \left|2{l}_{FP}\left[\frac{\left({k}_{mid}+1\right) - \left({k}_{mid}-1\right)}{\left({k}_{mid}+1\right) \left({k}_{mid}-1\right)}\right]\right| = \frac{4 {l}_{FP}}{{k}_{mid}^{2} - 1}$ setting $Δ {λ}_{ed - st} \geq 2 {W}_{laser}$ finally ${W}_{laser} \leq \frac{2 {l}_{FP}}{{k}_{mid}^{2} - 1}$

Wherein, *λₛₜ*, and *λ_{ed}* respectively represent the wavelength values corresponding to the adjacent wave peaks, and *kₛₜ* and *k_{ed}* respectively represent the longitudinal modulus of the adjacent wave peaks.

It should be pointed out that after the cavity length is calculated using the preset number of longitudinal modes (such as *k_{mid}* ) and the preset bandwidth of the laser, the fiber sensor is fabricated, then the fiber sensor is scanned by the laser, the wave peak scanned within the bandwidth *Wₗₐₛₑᵣ* must be the wave peak with longitudinal modulus *k_{mid}* =20 in the comb-shaped spectrum. At this time, according to *kₛₜ = k_{mid} + 1, k_{ed} = k_{mid}* - 1, it can be known that *kₛₜ =*21 and *k_{ed} =2*0*.*

In the embodiment of the present disclosure, according to the bandwidth of the laser emitting the laser signal, the wavelength value of the center point of the bandwidth of the laser, and the preset longitudinal modulus of the optical fiber sensor, the cavity length of the optical interference cavity can be determined by a formula, so that only a single peak in the comb-shaped spectrum output from the optical interference cavity is located within the bandwidth of the laser, so that the signal interference of adjacent peaks to the wave peak in the bandwidth of the laser is avoided during process of the data analysis, and cross-code is effectively prevented. Further, based on the above-mentioned cavity length limitation, it is possible to form a small-size and small-volume optical fiber sensor, which is beneficial to make the manufactured sensor chip keep the basis of maintaining good parameter consistency, high sensitivity, large dynamic range, good linearity, stable performance, strong reliability and other advantages, it has a compact structure and lighter weight, which is helpful for installation on the roof or inside of vehicles, such as electric passenger-bus. Compared with the electronic sensors in the prior art, due to the large size and heavy weight, it cannot be installed on electric passenger-bus, but can only be installed on inspection vehicles, engineering vehicles or freight locomotives. The technical solutions in the embodiments of the present disclosure not only avoid affecting the normal operation of the pantograph, but also the monitoring system for a pantograph can realize multi-directional monitoring, real-time accurate collection, analysis, and feedback of operating parameters related to the pantograph, catenary line, and pantograph-catenary relationship.

It should be pointed out that the cavity length of the optical interference cavity obtained by the above content, as shown in Figure 3, the wave peak can be located at any position within the laser bandwidth. When the wave peak is located at the edge of the laser bandwidth, It is easy to cause the adjacent peaks to enter the laser bandwidth because of manufacturing errors, etc., and then cross-code occurs.

Further, the cavity length of the optical interference cavity may satisfy the following formula: ${l}_{ctr} = {k}_{mid} \frac{{λ}_{ctr}}{2}$

Wherein, *l_{ctr}* is used to indicate the cavity length of the optical interference cavity.

It should be pointed out that both *l_{FP}* and *l_{ctr}* are used to represent the cavity length of the optical interference cavity. The cavity length *l_{FP}* can be selected from multiple values satisfying the conditions, and the cavity length *l_{ctr}* can be a further preferred value of the cavity length.

Specifically, the following steps can be used to calculate the cavity length of the optical interference cavity in the embodiment of the present disclosure, so that the wave peak can be located at the exact center position within the laser bandwidth, that is *λ_{FP}* = *λ_{ctr}.* setting ${λ}_{FP} = {λ}_{ctr} ,$ ${l}_{FP} = {l}_{ctr} = {k}_{st} \frac{{λ}_{st}}{2} = {k}_{mid} \frac{{λ}_{ctr}}{2} = {k}_{ed} \frac{{λ}_{ed}}{2}$ $Δ {λ}_{ed - st} = \left|{λ}_{ed}-{λ}_{st}\right| = \left|\frac{2 {l}_{ctr}}{{k}_{ed}}-\frac{2 {l}_{ctr}}{{k}_{st}}\right| = \left|2{l}_{ctr}\left(\frac{{k}_{st} - {k}_{ed}}{{k}_{ed} {k}_{st}}\right)\right|$ then *kₛₜ = k_{mid} +*1,*k_{ed} = k_{mid}* - 1, putting them into the above formula, a new formula is gotten: $Δ {λ}_{ed - st} = \left|2{l}_{ctr}\left[\frac{\left({k}_{mid}+1\right) - \left({k}_{mid}-1\right)}{\left({k}_{mid}+1\right) \left({k}_{mid}-1\right)}\right]\right| = \frac{4 {l}_{ctr}}{{k}_{mid}^{2} - 1}$ setting $Δ {λ}_{ed - st} \geq 2 {W}_{laser}$ ${W}_{laser} \leq \frac{2 {l}_{ctr}}{{k}_{mid}^{2} - 1}$

**In** the embodiment of the present disclosure, by setting the cavity length of the optical interference cavity to satisfy the above formula, it is possible to make not only a single peak in the comb-shaped spectrum output from the optical interference cavity within the bandwidth of the laser, but also the peak is also located in the center of the bandwidth of the laser, so that it is easier to avoid signal interference from adjacent peaks to the peak during the analysis process, and further effectively prevent cross-coding. Further, when the peak is located at the center position within the bandwidth of the laser, the full optical bandwidth of the laser can be measured, and the measurement effect can be improved.

In the specific implementation, take the laser bandwidth from 1520nm to 1560nm wavelengths with a total of 40nm optical bandwidth, and the designed center wavelength is 1540nm as an example, at this time the longitudinal modulus *k_{mid}* ∈[2,3,4,...38] , that is, there are 37 kinds of cavity lengths that meet the above conditions.

Further, the optical fiber sensor may be selected from: Micro-Electro-Mechanical System (MEMS) optical fiber sensor, Micro-Opto-Electro-Mechanical System (MOEMS) optical fiber sensor, and micro-opto-mechanical system (MOMS) fiber optic sensor.

Take MEMS optical fiber sensor as an example. MEMS optical fiber sensing technology is a 21st century cutting-edge technology based on micro/nano mechanics and optics. The masses, elastic supports, optical reflective micromirrors, light incident and exit waveguide systems of this technology are all directly integrated on a tiny chip, which truly realizes all-optical detection and transmission of signals such as vibration, pressure, current and temperature. The manufactured MEMS chip has the advantages of compact structure, one-piece package, good parameter consistency, high sensitivity, large dynamic range and good linearity, as well as stable performance and reliability.

The silicon-based sensitive structure of the MEMS chip is integrated and manufactured by micro-electromechanical technology, and the signal is detected and read using optical fiber detection technology, so it has the common advantages of MEMS sensing technology and optical fiber sensing technology. In addition, MEMS optical fiber sensing technology overcomes the mutual restriction between the "broadband" and "high precision" of the existing sensing technology. It has the characteristics of passive, wide temperature, miniaturization, anti-electromagnetic interference, lightness, easy networking and maintenance-free. Therefore, long-term accurate measurement can be achieved, and the complexity and cost of the smart operation and maintenance system can be reduced. Therefore, MEMS optical fiber sensing technology is very suitable for real-time monitoring of vehicle pantograph, catenary line and their relationships.

It should be pointed out that the MOEMS optical fiber sensor and the MOMS optical fiber sensor in the embodiment of the present disclosure may have the advantages of the above-mentioned MEMS optical fiber sensor.

It should be pointed out that in the embodiment of the present disclosure, the monitoring system may also include fiber grating sensors and other appropriate sensors. The fiber grating sensor and other appropriate sensors can provide a powerful supplement to the above-mentioned fiber optic sensor including an optical interference cavity.

Wherein, the fiber grating sensor may be a fiber Bragg grating (Fiber Bragg Grating, FBG) sensor, for example, a chirped FBG fiber grating sensor.

Further, the optical fiber sensor may be a passive sensor.

In the embodiment of the present disclosure, the passive sensor can be used to realize the passive detection when the detection terminal is not charged, which effectively improves the anti-electromagnetic ability, helps to avoid the danger to the passengers of the carriage due to power supply, and does not cause electrification accidents, and avoids interference caused by detection as well as ensures normal monitoring and improve detection accuracy.

Further, the monitoring system may comprise, as the one or more optical fiber sensors, multiple types of optical fiber sensors according to the types of signals that need to be collected.

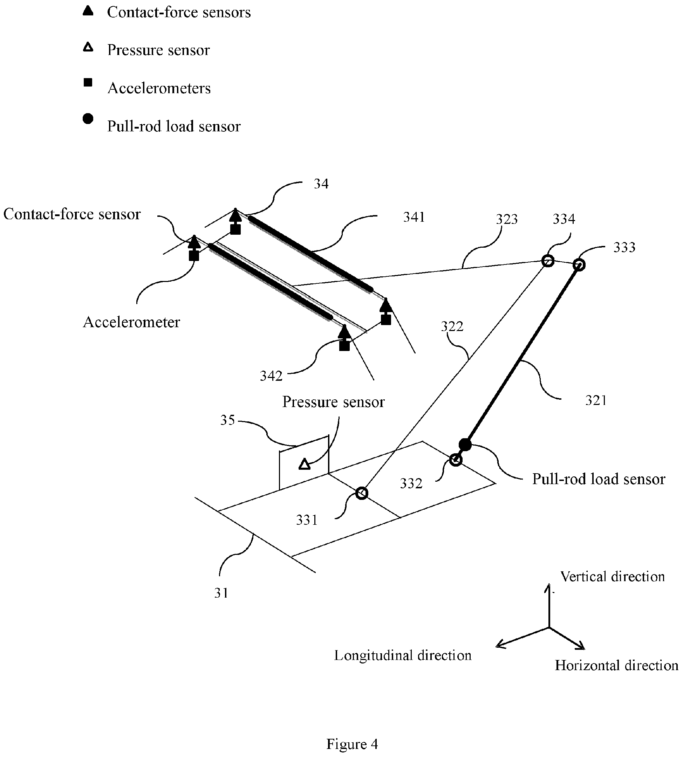

Referring to Figure 4, Figure 4 is a schematic diagram of the installation position of the optical fiber sensor on the pantograph in a monitoring system in an embodiment of the present disclosure.

The pantograph shown in Figure 4 may include a base frame 31, a four-bar linkage structure and a pantograph bow 34, and may also include a pneumatic control box 35.

Wherein, the pantograph bow 34 may include a carbon-contact-strip 341 and a bow support 342.

In the pantograph shown in Figure. 4, each pantograph bow 34 may include two carbon-contact-strips 341 and four bow supports 342, and every two bow supports 342 may be provided in pairs on both sides of a single carbon slide 341. It should be pointed out that the pantograph bow may also include other numbers of carbon-contact-strip and bow supports. The embodiment of the present disclosure does not limit the number and positional relationship of specific carbon-contact-strips and bow supports.

The lifting principle of the pantograph shown in Figure 4 can be: when the solenoid valve of the pantograph is energized, the compressed air in the carriage is in a special air circuit composed of key components such as filters and pressure reducing valves. One road is inflated to the air bellow of the pantograph, and at the same time, the other road is inflated to the air cavity of the carbon sliding plate 341 of the pantograph. When the air pressure in the air bellow reaches a certain pressure, the air bellow expands and deforms and pulls the wire rope. The wire rope drives the pantograph lower arm 322 to move. The lower arm 322 lifts the pantograph upper arm 323 with the assistance of the lower pantograph pull-rod 321. The upper arm 323 supports the pantograph bow 34 of the pantograph, and the pantograph bow 34 can always remain level within the working height range under the action of the balance bar. The working height of the pantograph bow 34 of the pantograph when raised depends on the pressure value of the air bellow/cylinder and the lead value of the flexible catenary line or the rigid catenary line, for example, it is between 350mm and 2500mm.

Further, the monitoring system may comprise, as the one or more optical fiber sensors, at least one contact-force sensor configured to collect pressure signals, the pantograph may include one or more pantograph bows 34, and each pantograph bow 34 includes a bow support 342. For the pantograph bow head 34 with a contact-force sensor installed, the contact-force sensor is installed inside or on the surface of the bow support 342.

In the embodiment of the present disclosure, for the pantograph bow 34 equipped with a contact-force sensor, by installing at least one contact-force sensor inside or on the surface of the bow support 342, there is an opportunity to monitor the hard point of the catenary line, the stagger, the contact force between the pantograph and the catenary line, the impact and the arcing.

Furthermore, the contact-force sensors can be arranged in pairs, and the pairs of contact-force sensors are respectively installed on the bow supports 342 at both ends of the same pantograph bow 34.

In the embodiment of the present disclosure, the contact-force sensors are arranged in pairs, and the paired contact-force sensors are respectively installed on the bow supports 342 at both ends of the same pantograph bow 34, and have the opportunity to monitor the contact-force between the pantograph and the catenary line, the wear of the carbon-contact-strip 341 of the pantograph, the wear area and the eccentric wear.

Regarding the amount of wear of the carbon-contact-strip 341, a carbon-contact-strip 341 on the pantograph bow 34 is generally supported by two bow supports 342 with buffer or/and damping system, and the contact-force sensor is embedded and integrated inside the bow support 342. Therefore, when the pantograph is in the falling state or when there is no pressure from the catenary line to the pantograph, at this time, the two contact-force sensors carry the static mass G₀ from a carbon-contact-strip 341, and its base and two horns. Since the carbon-contact-strip 341 is an easy-wearing part, and the horn is a non-wearing part, therefore, after the pantograph works for a period of time, such as 3 months or 6 months, the total static mass value of the carbon-contact-strip 341, the base and the two horns measured by the contact-force sensors will be reduced to G₀'(t), the difference G₀-G₀'(t) can be regarded as the wear amount ΔG₀(t) of the carbon-contact-strip 341. When G₀'(t) reaches the critical line after a period of time, a new carbon-contact-strip 341 should be replaced, and G₀ should be measured and recorded again.

In a specific implementation of the embodiment of the present disclosure, the pressure signal may be used to indicate the quality of the carbon-contact-strip structure of the pantograph, wherein the carbon-contact-strip structure may include a carbon-contact-strip, a base and two horns.

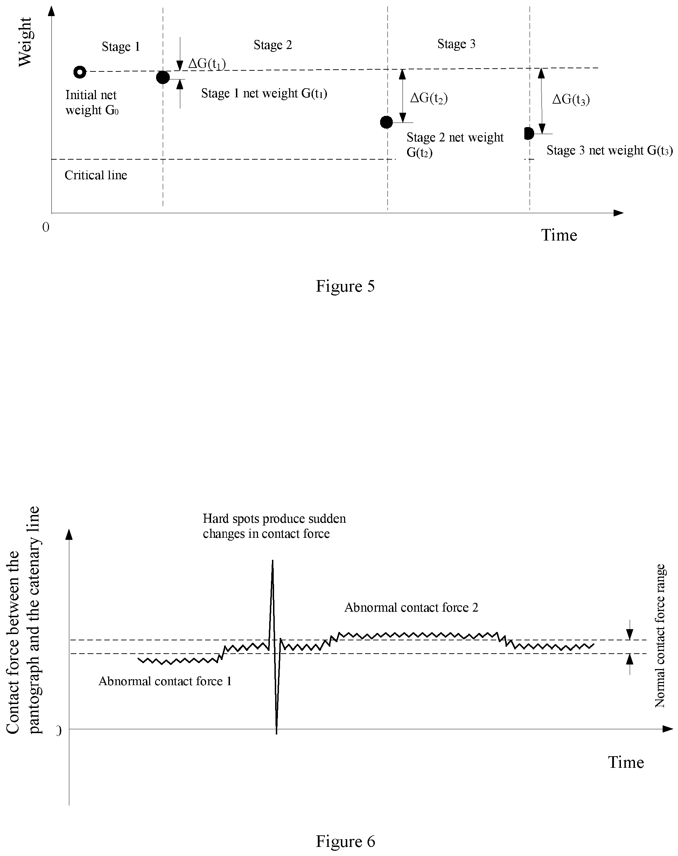

With reference to Figure 4 and Figure 5, Figure 5 is a schematic diagram of the wear amount of a carbon-contact-strip changing with time in an embodiment of the present disclosure.

Specifically, the processor may use the following formula to determine the amount of wear of the carbon-contact-strip structure: ${G}_{0 , i} = {\sum }_{j = 1}^{{N}_{S}} {K}_{G , i , j} \left[{λ}_{CS , i , j}-{λ}_{D , i , j}\right]$ ${G}_{0 , i}^{′} \left(t\right) = {\sum }_{j = 1}^{{N}_{S}} {K}_{G , i , j} \left[{λ}_{CS , i , j}^{′}\left(t\right)-{λ}_{D , i , j}\right]$ $Δ {G}_{0 , i} \left(t\right) = {G}_{0 , i}^{′} \left(t\right) - {G}_{0 , i}$

Wherein, *G*_{0,i} is used to represent the initial mass of the i-th carbon-contact-strip structure when it is not worn, G'_{0,i}(t) is used to represent the mass of the i-th carbon-contact-strip structure at the time t, and K_{G,i,j} is used to represent the contact-force coefficient of the j-th contact-force sensor of the i-th carbon-contact-strip structure, λ_{D,i,j} is used to represent the wavelength value of the j-th contact-force sensor of the i-th carbon-contact-strip structure in the state without any force, and λ_{CS,i,j} is used to represent the wavelength value of the j-th contact-force sensor of the i-th carbon-contact-strip structure when the i-th carbon-contact-strip structure is not worn, λ'_{CS,i,j} is used to represent the wavelength value of the j-th contact-force sensor of the i-th carbon-contact-strip at the time t, and N_{S} is used to represent the number of contact-force sensors on the same carbon-contact-strip, i is used to represent the serial number of the carbon-contact-strip structure, and j is used to represent the serial number of the contact-force sensor of each carbon-contact-strip structure.

In a specific implementation of the embodiment of the present disclosure, the N_{S} can also be used to indicate the number of bow supports at both ends of the same group of the carbon-contact-strip, which can be set to 2.

It is understandable that the initial mass of the carbon-contact-strip structure can be measured when it is not worn out, such as when it is to be installed or when it is newly installed, to obtain *G*₀*_{,i}.*

Regarding the partial wear of the carbon-contact-stripe 341, when the vehicle is running, since the catenary line is in a "Z" shape on the driving route, the two contact-force sensors on each carbon-contact-strip 341 can respectively feel the pressure from the catenary line. The pressure changes periodically with the stagger of the catenary line. From this, it can be calculated that the trajectory of the contact point between the catenary line and the pantograph carbon-contact-strip 341 is distributed in a "Z" shape in the main wear area of the carbon-contact-strip 341 of length L. Under normal working conditions, the wear area of the carbon-contact-strip 341 is within the length L of the carbon-contact-strip 341, and the center line of the carbon-contact-strip 341 is axially symmetrically distributed, which is called the main wear area. When the stagger of the catenary line on the line exceeds the deviation range, or/and the pantograph bow is laterally unstable, the trajectory of the contact point between the catenary line and the carbon-contact-strip 341 will exceed the main wear on the center line side of the carbon-contact-strip 341. It appears outside the area, causing the wear on one side of the carbon-contact-strip 341 (with the center line of the carbon-contact-strip 341 as the boundary) to be greater than the wear on the other side, and even the phenomenon of claw wear. In addition, when the pantograph is in the falling state or when there is no pressure from the catenary line to the pantograph, the contact-force sensor integrated on the bow head support at both ends of each carbon-contact-strip 341 detects the measurement value is about half of the total mass of the support carbon-contact-strip 341. If on the same carbon-contact-strip 341, the measurement value of the contact-force sensor at one end is severely larger than the measurement value of the contact-force sensor at the other end, the carbon-contact-strip 341 may be eccentrically worn.

Furthermore, the bow supports 342 can correspond to the contact-force sensors one-to-one, and a corresponding contact-force sensor is installed inside or on the surface of each bow support.

In the embodiment of the present disclosure, the pantograph bow support 342 corresponds to the contact-force sensor one-to-one, and the corresponding contact-force sensor is installed inside or on the surface of each bow support 342, which can monitor all pantograph bows, and avoid leaving hidden dangers due to missed inspections.

Furthermore, a temperature sensor may be embedded inside the contact-force sensor, or the contact-force sensor may be coupled with a temperature sensor.

In the embodiment of the present disclosure, by setting a temperature sensor, temperature compensation and real-time temperature sensing can be realized.

With reference to Figures 4, 6 and 7, Figure 6 is a time-domain schematic diagram of a pantograph bow sensing the contact force between the pantograph and catenary line when the train is running in an embodiment of the present disclosure. The time-domain schematic diagram of the contact force between the pantograph and the catenary line sensed by the contact-force sensors at both ends of the carbon-contact-strip during driving.

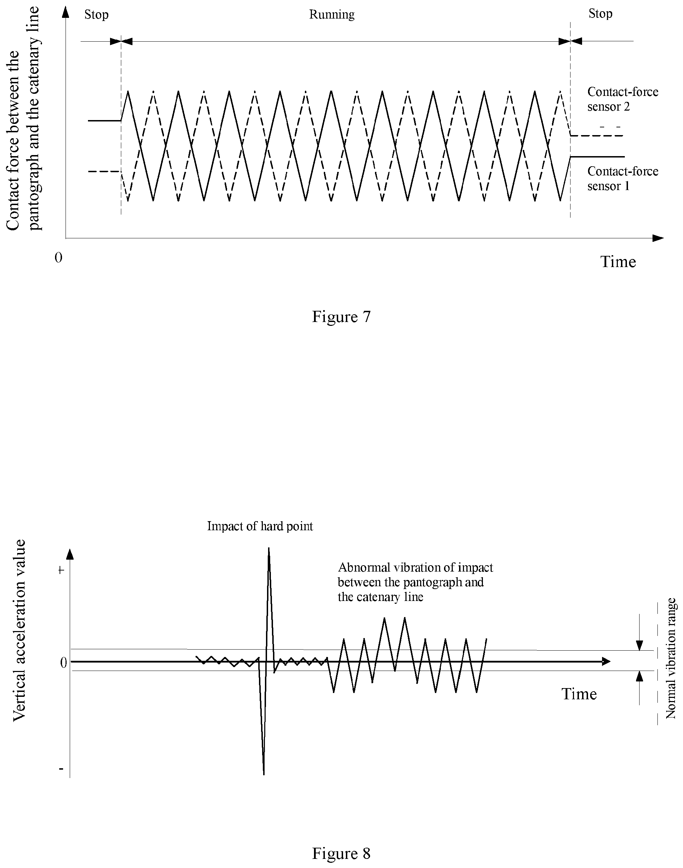

It should be pointed out that the contact force between the pantograph and the catenary line shown in Figure 6 when driving is essentially the force that the pantograph bow bears as a whole. Figure 7 shows that the contact force between the two ends of the contact-force sensor on the same carbon-contact-strip when driving is essentially the force sensed by the contact-force sensor itself.

For the contact force between the pantograph and the catenary line, in order to allow the pantograph to receive the current from the catenary line normally when the train is running, a certain contact force must be maintained between the pantograph and the catenary line. The magnitude of the contact force depends on the pantograph of different structures. Generally, the contact force between the pantograph and the catenary line is a certain value, such as 80N or 120N.

In a specific implementation, each group of carbon-contact-strip 341, carbon-contact-strip base and horns are supported by two bow supports 342, and the contact-force sensor is integrated on the damping/cushion system of the bow supports 342. Among them, the damping/cushion systems of different types of pantograph bows are different, such as spring box type, leaf spring type and tension spring type. The contact force sensor is also embedded with a temperature sensor for temperature compensation or/and for sensing the instantaneous temperature during arcing.

First, when the catenary line is not in contact with the pantograph bow 34, the contact-force sensor only senses the gravity of the carbon-contact-strip 341, carbon-contact-strip base and horns supported by the bow support 34; When the pantograph bow does not touch the catenary line, the measurement value of the contact-force sensor between the pantograph and the catenary is zeroed; finally, when the catenary line contacts the pantograph bow 34 and generates a certain force, the sum of the measured values of each contact-force sensor is the contact force between the pantograph and catenary line. Moreover, since the contact point between the catenary line and the carbon-contact-strip 341, that is, the stagger of the catenary line, is a "Z" shape change, therefore, for the contact force sensors at both ends of the same carbon-contact-strip 341, their respective measured value also changes in a "Z" shape. When parking, the measurement value of each contact-force sensor on the single carbon-contact-strip 341 does not change, and the time domain curve is flat; when driving, the measurement value of each contact-force sensor on the single carbon-contact-strip 341 is changing, the time domain curve is zigzag. However, the contact force borne by a single carbon-contact-strip 341 is the sum of the measured values of the contact-force sensors at both ends of the carbon-contact-strip, and the total contact force between the pantograph bow and the catenary line is the sum of the contact forces borne by all the carbon-contact-strips 341.

It should be pointed out that when the vehicle is running, the contact force between the pantograph and the catenary line also fluctuates within a certain range, such as 120N±5N. If the fluctuation range is exceeded, the contact force is regarded as abnormal. If the contact force is lower than the normal contact force working range, the pressure between the pantograph and the catenary line is too small, and the arcing will occur frequently, which will cause excessive electrical wear on the carbon-contact-strip 341; if the contact force is higher than the working range of the contact force, the pressure between the pantograph and the catenary line will be too large, and the impact and vibration between the pantograph and the catenary line will be abnormal, which will cause excessive mechanical wear on the carbon-contact-strip 341.

In a specific implementation of the embodiment of the present disclosure, the pressure signal is used to indicate the contact force between the pantograph bow and the catenary line; the processor may use the following formula to determine the contact force between the pantograph bow and the catenary line: ${F}_{S , i , j} \left(t\right) = {K}_{S , i , j} \left[{λ}_{i , j}\left(t\right)-{λ}_{0 , i , j}+{k}_{T , i , j}\left(T\left(t\right)-{T}_{0}\right)\right]$ ${F}_{cp} \left(t\right) = {\sum }_{i = 1}^{{N}_{C}} {\sum }_{j = 1}^{{N}_{S} = 2} {F}_{S , i , j} \left(t\right)$

Wherein, F_{S,i,j}(t) is used to represent the value of the contact-force at the time t between the catenary line and the contact-force sensor on the j-th bow support of the i-th carbon-contact-strip of the pantograph bow, K_{S,i,j} are used to represent the contact-force coefficient of the j-th contact-force sensor of the i-th carbon-contact-strip, λ_{i,j}(t) is used to indicate the wavelength value of the j-th contact-force sensor of the i-th carbon-contact-strip at the time t, and λ_{0,i,j} is used to indicate the wavelength value of the j-th contact-force sensor of the i-th carbon-contact-strip when the pantograph bow has no mutual force with the catenary line, k_{T,i,j} is used to represent the temperature drift coefficient of the j-th contact-force sensor of the i-th carbon-contact-strip, T(t) is used to represent the temperature value at the time t, T₀ is used to indicate the initial temperature value, F_{cp}(t) is used to indicate the value of the contact-force at the time t between the pantograph bow and the catenary line, Nc is used to indicate the number of carbon-contact-strips on the pantograph bows, N_{S} is used to indicate the number of bow supports on the same carbon-contact-strip.

Continuing to refer to Figure 4, further, the monitoring system may comprise, as the one or more optical fiber sensors, at least one accelerometer configured to collect acceleration signals, the pantograph may include one or more pantograph bows 34, and each pantograph bow 34 may include a carbon-contact-strip, the bow support 342 respectively connected to two ends of the carbon-contact-strip 341, and the connecting parts; the connecting part is used to connect the carbon-contact-strip 341 and each bow support 342; for the pantograph bow 34 with an accelerometer installed, the accelerometer can be installed in one or more of the following places: inside the bow support 342, or/and on the surface and connecting parts of the bow support 342.

In the embodiment of the present disclosure, for the pantograph bow 34 equipped with an accelerometer, the accelerometer can be installed in one or more of the following: inside the bow support 342, or/and on the surface and connecting parts of the bow support 342, there is an opportunity to monitor the hard point the catenary line, the impact between the pantograph and the catenary line, the height the catenary line, and effective distinction between flexible catenary line and rigid catenary line.

Furthermore, the accelerometers may be arranged in pairs; wherein, the pair of accelerometers may be respectively installed on the bow supports 342 at both ends of the same pantograph bow 34, or the pair of accelerometers may be respectively installed in the connecting parts at both ends of the same pantograph bow head 34.

In the embodiment of the present disclosure, the accelerometers are arranged in pairs, wherein the pair of accelerometers are respectively installed on the bow supports 342 at both ends of the same pantograph bow 34, or the pair of accelerometers are respectively installed on the bow supports 342 at both ends of the same pantograph bow 34, or the pair of accelerometers are respectively installed on the connecting parts at both ends of the same pantograph bow 34. The acceleration signals at both ends of the same pantograph bow 34 can also be used to effectively monitor the stability of the pantograph bow 34.

In specific implementation, the dynamic stability of the pantograph bow 34 can be monitored in real time by performing a two-time integration of the horizontal acceleration value and the longitudinal acceleration value of the three-directional accelerometer integrated on both sides of the single carbon-contact-strip 341. If the dynamic horizontal offset value generated by the vibration of the pantograph bow 34 exceeds the deviation value specified by the center line of the vehicle operation line, the pantograph bow 34 will be horizontally unstable; if the dynamic vertical amplitude value sensed by the accelerometer on the side of the single carbon-contact-strip 341 due to the vibration of the pantograph bow, is much larger than the vertical amplitude value on the other side of the same carbon-contact-strip, and there is vertical instability of the pantograph bow 34 due to the buffering of the pantograph bow 34 or/and the fatigue of the damping system. In addition, through the dynamic trajectory of the contact point between the carbon-contact-strip 341 and the catenary line, or/and by comparing the measurement values of the contact-force sensors on both sides of the single carbon-contact-strip 341 in the pantograph falling state or in the natural rising state without pressure from the catenary line on the pantograph, the stability of the pantograph bow is evaluated

When the train is running, the vibration trajectory of the two ends of the carbon-contact-strip of the pantograph bow can be drawn in the "vertical-horizontal" plane by the displacement value at each moment, and the vibration amplitude of the two ends of the same group of carbon-contact-strip can be compared to judge the dynamic stability of the pantograph bow. When the pantograph head is in a free and static state, the static stability of the pantograph bow is judged by comparing the values of the contact-force sensors on the bow supports at both ends of the same carbon-contact-strip.

Among them, the pantograph state usually includes four states: the falling state, the ascending state when the pantograph bow is not in contact with the catenary line, the ascending state when the pantograph bow is in contact with the catenary line generates mutual force, as well as the ascending state of motion when the pantograph bow is in contact with the catenary line and generates mutual force. The free and static state can be used to indicate the falling state and the ascending state when the pantograph bow is not in contact with the catenary line.

Specifically, the acceleration signal is used to indicate the acceleration of at least one pantograph bow in the horizontal direction and the acceleration of at least one pantograph bow in the vertical direction; the processor uses the following formula to determine the vertical and horizontal vibration displacements of pantograph bow: ${d}_{H} \left(t\right) = {d}_{0 , H} + {\int }_{0}^{t} \left[{ν}_{0 , H}+{\int }_{0}^{t} {a}_{H} \left(t\right) dt\right] dt$ ${d}_{V} \left(t\right) = {d}_{0 , V} + {\int }_{0}^{t} \left[{ν}_{0 , V}+{\int }_{0}^{t} {a}_{V} \left(t\right) dt\right] dt$

Wherein, d_{H}(t) is used to represent the displacement value of the pantograph bow in the horizontal direction at the time t, d_{0,H} is used to represent the initial displacement value of the pantograph bow in the horizontal direction, v_{0,H} is used to represent the initial velocity value of the pantograph bow in the horizontal direction, a_{H}(t) is used to represent the acceleration value of the pantograph bow in the horizontal direction at the time t, d_{V}(t) is used to represent the displacement value of the pantograph bow in the vertical direction at the time t, d_{0,V} is used to represent the initial displacement value of the pantograph bow in the vertical direction, v_{0,V} is used to indicate the initial velocity of the pantograph bow in the vertical direction, a_{V}(t) is used to represent the acceleration value of the pantograph bow in the vertical direction at the time t.

Furthermore, the bow support 342 and the accelerometer can be in one-to-one correspondence, and each bow support 342 has a corresponding accelerometer installed inside or on the surface.

In the embodiment of the present disclosure, the bow support 342 corresponds to the accelerometer one-to-one, and the corresponding accelerometer is installed inside or on the surface of each bow support 342, which can monitor all pantograph bows and avoid the hidden dangers due to the missed inspection.

Furthermore, the accelerometer may be an acceleration sensor integrating measurement functions in multiple directions, and the accelerometer may also include multiple sub-sensors, and each sub-sensor is used to measure the acceleration signal in a single direction.

Furthermore, the accelerometer may be an optical fiber three-axis acceleration sensors to accurately and conveniently collect three-directional acceleration signals, wherein, the three-directional acceleration signal may include horizontal, longitudinal, and vertical acceleration signals, and the two directions are orthogonal each other.

Furthermore, a current sensor may be embedded inside the accelerometer, or the accelerometer may be coupled with a current sensor.

In the embodiment of the present disclosure, by setting a current sensor, the functions such as real-time current measurement can be realized.

In a specific implementation of the embodiment of the present disclosure, a contact-force sensor and an accelerometer may be used to determine the hard point of the catenary line.

With reference to Figures 4, 6 and 8, Figure 8 is a time-domain schematic diagram of the vertical acceleration value of the pantograph bow sensed by an accelerometer located on the pantograph bow in an embodiment of the present disclosure.

For the hard points on the catenary line, real-time monitoring of the hard points on the catenary line can be carried out by monitoring the vertical acceleration value or/and the longitudinal acceleration value in the accelerometer integrated on the pantograph bow 34. Under normal circumstances, when a vehicle (such as an electric passenger carriage) is running, the pantograph bow 34 will vibrate up and down in the vertical direction. Depending on the driving speed, the height and type of the catenary line, the pantograph bow 34 vibrates within a certain interval, for example ±2g. Referring to Figure 8, if the pantograph bow 34 hits a hard point on the catenary line, it will instantly produce an impact of ±100~200g. Combined with the train information management system, the position of the hard point on the catenary line can be located, which brings convenience of the maintenance of the catenary line.

In addition, the contact-force sensor on the pantograph bow 34 can also be used to monitor the hard point of the catenary line. When the pantograph bow 34 hits the hard point on the catenary line, the pantograph bow 34 impacted by the hard point will be separated instantly. At this time, there is no force transmission between the pantograph bow and catenary line due to the separation from each other. Therefore, the value detected by the contact-force sensor is 0, even a negative value slightly lower than 0. Then, the pantograph bow 34 and the catenary line will bounce back in their opposite directions and contact again in a "collision" type. Referring to Figure 6, the value of the contact force between the pantograph bow and the catenary line monitored by the contact-force sensor will be abnormally large at this time, it can also be regarded as the basis for judging the hard point of the catenary line.

Specifically, the optical fiber sensor further includes at least one contact-force sensor to collect pressure signals, the pantograph includes one or more pantograph bows, each pantograph bow includes bow supports; for a pantograph bow mounted with contact-force sensors , the contact-force sensor is installed inside or on the surface of the bow support; the pressure signal is used to indicate the contact-force between the pantograph bow and the catenary line; the acceleration signal is used to indicate the acceleration of at least one pantograph bow in the horizontal direction and the acceleration of at least one pantograph bow in the vertical direction; the processor uses the following formula to determine the acceleration value of the pantograph bow in the vertical direction and the contact-force between the pantograph bow and the catenary line: ${a}_{V} \left(t\right) = {K}_{V} \left[{λ}_{V}\left(t\right)-{λ}_{0 , V}+{k}_{T , V}\left(T\left(t\right)-{T}_{0}\right)\right]$ ${F}_{S} \left(t\right) = {K}_{S} \left[{λ}_{S}\left(t\right)-{λ}_{0 , S}+{k}_{T , S}\left(T\left(t\right)-{T}_{0}\right)\right]$

Wherein, a_{V}(t) is used to represent the acceleration value of the pantograph bow in the vertical direction at the time t, K_{V} is used to represent the acceleration coefficient of the accelerometer in the vertical direction, λ_{V}(t) is used to represent the wavelength value at the time t in the vertical direction of the accelerometer, λ_{0,V} is used to represent the wavelength value of the accelerometer in the vertical direction in a static state, k_{T,V} is used to represent the temperature drift coefficient of the accelerometer in the vertical direction, F_{S}(t) is used to represent the contact-force value between the contact-force sensor and the catenary line at the time t, K_{S} is used to represent the contact-force coefficient of the contact-force sensor, λ_{S}(t) is used to represent the wavelength value of the contact-force sensor at the time t, λ₀,_{S} is used to indicate the wavelength value of the contact-force sensor when the pantograph bow has no mutual force with the catenary line, k_{T,S} is used to indicate the temperature drift coefficient of the contact-force sensor, T(t) is used to represent the temperature value T at the time t, T₀ is used to represent the initial temperature value.

For the definition of the contact force between the pantograph bow and the catenary line and more, please refer to the previous description, and it will not be repeated here.

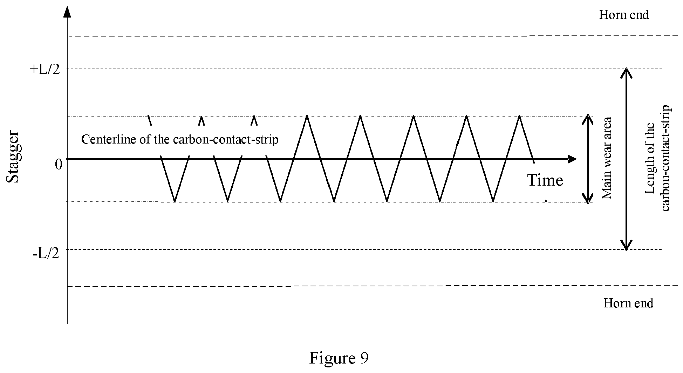

Referring to Figure 9, Figure 9 is a schematic diagram of the time domain change of the stagger of the catenary line of a carbon-contact-strip during driving in an embodiment of the present disclosure.

For the stagger of the catenary line, assuming that the longitudinal centerline of the pantograph coincides with the centerline of the track line, the stagger can be calculated by the contact force value between the pantograph and the catenary line measured by the contact-force sensors on both ends of the single carbon-contact-strip 341 of the pantograph. And combined the running speed of the vehicle (the running speed of the train can be obtained by integrating the longitudinal acceleration value detected by the accelerometer on the pantograph bow, or it can be obtained by the train information management system), the dynamic stagger of the catenary line can be gotten during the process of the vehicle moving.

Specifically, the optical fiber sensor further includes at least one contact-force sensor to collect pressure signals, the pantograph includes one or more pantograph bows, each pantograph bow includes bow supports; for a pantograph bow mounted with a contact-force sensor, the contact-force sensor is installed inside or on the surface of the bow support; the pressure signal is used to indicate the contact-force between the pantograph bow and the catenary line; the acceleration signal is used to indicate the acceleration of at least one pantograph bow in the longitudinal direction; the processor uses the following formula to determine the stagger of the catenary line: ${Z}_{C} \left(t\right) = {L}_{S} \left(\frac{{F}_{S , i , gch} \left(t\right)}{{F}_{S , i , drg} \left(t\right) + {F}_{S , i , gch} \left(t\right)}-\frac{1}{2}\right) , i = 1 , 2 , 3 , 4$ or, ${Z}_{C} \left(t\right) = {L}_{S} \left(\frac{1}{2}-\frac{{F}_{S , i , drg} \left(t\right)}{{F}_{S , i , drg} \left(t\right) + {F}_{S , i , gch} \left(t\right)}\right) , i = 1 , 2 , 3 , 4$ ${ν}_{L} \left(t\right) = {ν}_{0 , L} + {\int }_{0}^{t} {a}_{L} \left(t\right) dt$ ${D}_{L} \left(t\right) = {D}_{0 , L} + {\int }_{0}^{t} {ν}_{L} \left(t\right) dt$

Wherein, Z_{C}(t) is used to indicate the stagger of the catenary line at the time t, and it is defined that Z_{C} is a negative value on the right side of the train's forward direction , and Z_{C} is a positive value on the left side of the train's forward direction. L_{S} is the distance between the center of the bow supports with buffer or/and damping system at both ends of the same carbon-contact-strip, FS, i, drg and FS, i, gch are used to indicate respectively the contact-force values between the catenary line and the contact-force sensors installed on the right and left bow supports of the i-th carbon-contact-strip of the pantograph bow, v_{L}(t) is used to represent the speed value of the pantograph bow in the longitudinal direction at the time t, v_{0,L} is used to represent the initial velocity of the pantograph bow in the longitudinal direction, a_{L}(t) is used to represent the acceleration value a_{L} of the pantograph bow in the longitudinal direction at the time t, D_{L}(t) is used to represent the travel distance of the train at the time t, D_{0,L} is used to represent the initial travel distance of the train.

It should be pointed out that L shown in Figure 9 is the length of the carbon-contact-strip, and from -L/2 to +L/2 is used to indicate the overall length of the carbon-contact-strip.

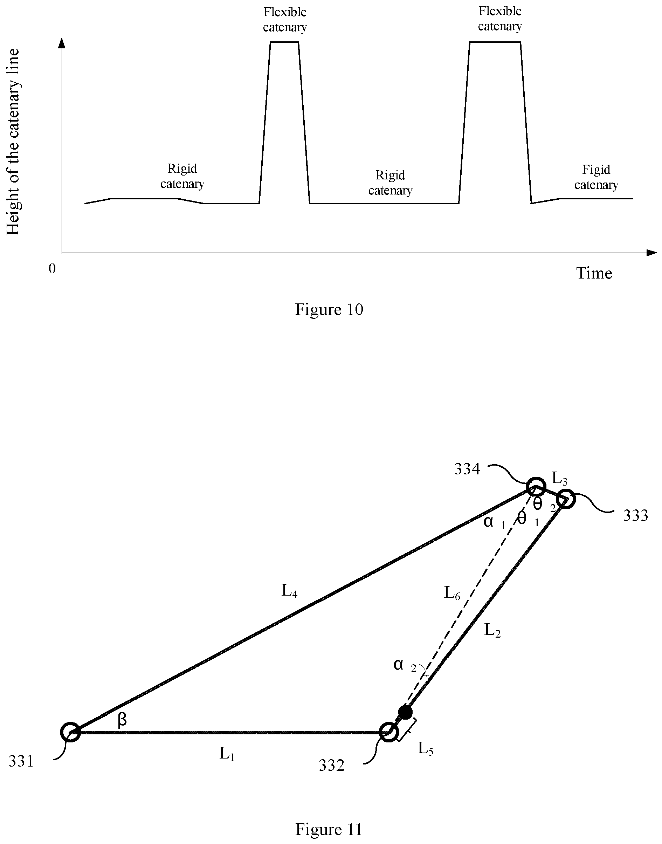

Referring to Figure 10, Figure 10 is a time-domain schematic diagram of the height of the catenay line during train's running in an embodiment of the present disclosure.

For the height of the catenary line, through the two-time integration of the vertical acceleration value of the accelerometer integrated on the pantograph bow 34, and combined with the lifting height of the pantograph during operation and the height of the vehicle roof relative to the ground, the dynamic height value of the catenary line can be monitored in real time.

Regarding the effective distinction between the flexible catenary line and the rigid catenary line, it is possible to judge whether it is a flexible catenary line or a rigid catenary line through the calculated the height of the catenary line and the measured vertical acceleration value of the accelerometer. In general, flexible catenary line are mostly outside the tunnel, while rigid catenary line are mostly inside the tunnel, and the height of the flexible catenary line is greater than that of the rigid catenary line. In addition, the amplitude of the vibration of the pantograph bow 34 caused by the flexible catenary line is slightly larger than the amplitude of the vibration of the pantograph bow 34 caused by the rigid catenary line.

Specifically, the acceleration signal is used to indicate the acceleration of at least one pantograph bow in the vertical direction; the processor uses the following formula to determine the height of the catenary line: ${ν}_{V} \left(t\right) = {ν}_{0 , V} + {\int }_{0}^{t} {a}_{V} \left(t\right) dt$ ${h}_{C} \left(t\right) = {h}_{Tr} + {h}_{cp , 0} \left({P}_{A , 0}\right) + {\int }_{0}^{t} {ν}_{V} \left(t\right) dt$

Wherein, v_{V}(t) is used to represent the velocity value of the pantograph bow in the vertical direction at the time t, v_{0,V} is used to represent the initial velocity value of the pantograph bow in the vertical direction , a_{V}(t) is used to represent the acceleration value of the pantograph bow in the vertical direction at the time t, h_{C}(t) is used to indicate the height of the catenary line at the time t, h_{Tr} is used to indicate the height of the roof of the carriage in which the pantograph is located relative to the ground plane, h_{cp,0}(P_{A,0}) is used to indicate the height of the upper surface of the carbon-contact-strip of the pantograph bow relative to the roof when the pressure value of the air bellow/cylinder is P_{A,0}. P_{A,0} is used to represent the pressure value of the air bellow/cylinder in the static bow-up state when the contact-force between the pantograph bow and the catenary line is required for normal current flow.

It should be pointed out that the pressure value of the air bellow/cylinder can be obtained in a conventional way, or can be measured by an optical fiber sensor. In the following, the case where the optical fiber sensor includes at least one air pressure sensor to collect air pressure signals will be described.

For the impact between the pantograph and the catenary line, it is also called the catenary line impact. The suspension geometric parameters of the catenary line exceed the deviation, or/and the instability of the pantograph bow 34 and the deviation of the height of the bow will cause the impact between the pantograph and the catenary line. Therefore, the abnormal vibration of the pantograph bow 34 can be sensed by the vertical acceleration value or/and the longitudinal acceleration value in the accelerometer integrated on the pantograph bow 34, so as to distinguish the impact between the pantograph and the catenary line and locate the road section.

For the arcing between the pantograph and the catenary line, the contact between the pantograph and the catenary line is unstable during the operation of the vehicle, which causes the catenary line and the pantograph bow 34 to separate from each other, and the discharge phenomenon caused by the breakdown of the air gap, accompanied by instantaneous high temperature and the occurrence of high-frequency electromagnetic pulse phenomenon. Therefore, arcing is a state of being mechanically separated but electrically connected.

In a specific implementation, the vertical acceleration value or/and the longitudinal acceleration value of the accelerometer on the pantograph bow 34 can be used to sense the impact between the pantograph and the catenary line. The greater the impact between the pantograph and the catenary line, the higher the frequency of arcing.

It should be pointed out that in the specific implementation, it can also be combined with the optical fiber current sensor integrated in the accelerometer's housing, the optical fiber temperature sensor integrated in the contact-force sensor's housing, and the optical fiber air pressure sensor integrated in the pneumatic control box to monitor respectively in the real-time the temperature value, the current value and the air pressure value, which can determine the occurrence of arcing between the pantograph and the catenary line.

Further, the optical fiber sensor may include at least one temperature sensor to collect temperature signals, the pantograph may include one or more pantograph bows 34, and each pantograph bow 34 may include a carbon-contact-strip 341, the bow supports 342 connected at both ends with the carbon-contact-strip 341 and the connecting parts, the connecting parts are used to connect the carbon-contact-strip 341 and the bow supports 342; For the pantograph bow 34 equipped with a temperature sensor, the temperature sensor may be installed at one or more of the following: the inside or surface of the bow support 342, and on the connecting parts.

In the embodiment of the present disclosure, for the pantograph bow with a temperature sensor, the temperature sensor is installed at one or more of the following: the inside or surface of the bow support 342, and on the connecting parts, there is an opportunity to monitor the arcing between the pantograph and the catenary line according to the temperature signal.

It is understandable that when the problem of arcing between the pantograph and the catenary line occurs, the nearby temperature will increase significantly. The temperature sensor is used to monitor the temperature, and when the preset temperature threshold is exceeded, it is judged accurately whether the problem of arcing between the pantograph and the catenary line occurs or not.

Further, the optical fiber sensor may include at least one current sensor to collect current signals,the pantograph may include one or more pantograph bows 34, and each pantograph bow 34 may include a carbon-contact-strip 341, the bow supports 342 connected at both ends with the carbon-contact-strip 341 and the connecting parts, the connecting parts are used to connect the carbon-contact-strip 341 and the bow supports 342; for the pantograph bow 34 equipped with a current sensor, the current sensor may be installed at one or more of the following: the inside or surface of the bow support 342, and on the connecting parts.

In the embodiment of the present disclosure, for the pantograph bow with current sensor, the current sensor is installed in one or more of the following places: the inside or surface of the bow support 342, and on the connecting parts, there is an opportunity to monitor the arcing between the pantograph and the catenary line according to the current signal.

It is understandable that when there is a problem of arcing between the pantograph and the catenary line, the current on the line will be significantly abnormal. The temperature sensor is used to monitor the temperature, and when the preset current threshold is exceeded, it is judged accurately whether the problem of arcing between the pantograph and the catenary line occurs or not.

Further, the optical fiber sensor may include at least one load sensor to collect load signals, the pantograph may include a four-bar linkage structure; the load sensor may be installed in one or more of the following: the upper arm 323 of the four-bar linkage structure, the lower arm 322 of the four-bar linkage structure, and the pull-rod 321 of the four-link structure.

In the embodiment of the present disclosure, the load sensor is installed at one or more of the following four-bar linkage structure: the upper arm 323, the lower arm 322, the pull-rod 321, which can monitor the tension and the bending moment of the upper arm 323, the lower arm 322, and the pull-rod 321. Further, the load sensor provided on the pull-rod 321 can also be used to monitor the jamming of the connecting shafts at both ends of the pull-rod 321, so as to determine the jamming of the hinge system.

Furthermore, a temperature sensor may be embedded inside the load sensor, or the load sensor may be coupled with a temperature sensor.

In the embodiment of the present disclosure, by setting a temperature sensor, temperature compensation and real-time temperature sensing can be realized.

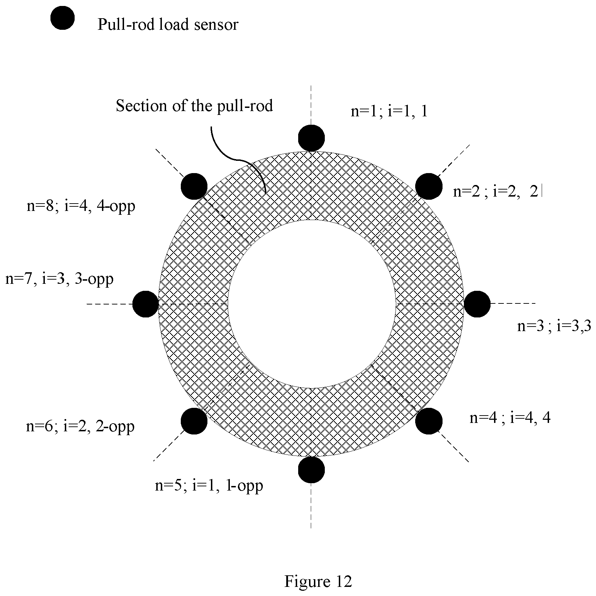

With reference to Figure 4, Figure 11 and Figure 12, Figure 11 is a schematic structural diagram of a four-bar linkage structure in an embodiment of the present disclosure. Figure 12 is a schematic diagram of the position of a load sensor on the same circumferential section of the pull-rod in the embodiment of the present disclosure.

The four-bar linkage structure may include the pull-rod 321, the lower arm 322, and the upper arm 323, and may also include the first connecting shaft 331, the second connecting shaft 332, the third connecting shaft 333, and the fourth connecting shaft 334.

The connecting shaft may be a hinge shaft, for example, a spherical hinge shaft.

The first connecting shaft 331 may be used to connect the lower arm 322 and the base frame 31, the second connecting shaft 332 may be used to connect the pull-rod 321 and the base frame 31, and the third connecting shaft 333 may be used to connect the pull-rod 321 and the upper arm 323, and the fourth connecting shaft 334 can be used to connect the lower arm 322 and the upper arm 323.

In the four-bar linkage structure of the pantograph, the distance between each axis is constant, and the inner angle and the shape of the four-bar linkage structure depend on the working height of the pantograph.

For the tension monitoring of the pull-rod 321, the pull-rod load sensor can be composed of four fiber optic stress chips with temperature compensation function, and the sensing directions of the four optical fiber stress chips are integrated on the outer wall of the pull-rod 321 near the second connecting shaft 332 along the length direction of the pull-rod 321. More specifically, for example, it can be determined whether the current tension of the pull-rod 321 is within the normal bearing range according to the comparison result of the tension when there is a load and when there is no load on the pull-rod 321. The measurement of the tension of the pull- rod can be the sum of the force changes of the four fiber stress chips when there is a load compared to when there is no load. It should be noted that, taking a non-restrictive pantograph as an example, the maximum tension value at both ends of the pull-rod can be 10000N, and the tension value under normal operation can be 7000N~8000N.

Specifically, as shown in Figure 12, the load sensor can be installed on the same cross-sectional circumference of any cross-section of the pull-rod. In the figure, 8 load sensors are taken as an example, and they are installed in pairs at opposite positions. For example, the load sensor with serial number n=1 is located at the end 1, and the opposite is the load sensor with serial number n=5, located at the end 1-opp. In the same way, the load sensor with serial number n=2 is located at the end 2, and the load sensor with serial number n=6 is located at the end 2-opp; the load sensor with serial number n=3 is located at the end 3, the opposite load sensor with the serial number n=7, located at the end 3-opp; the load sensor with the serial number n=4, is located at the end 4, and the load sensor with the serial number n=8 is located at the end 4-opp.

Further, the load signal is used to indicate the tension of the pull-rod; the processor uses the following formula to determine the tension value of the pull-rod: ${F}_{pf} \left(t\right) = {\sum }_{n = 1}^{N} {K}_{pf , n} \left\{{λ}_{n}\left(t\right)-{λ}_{0 , n}+{k}_{T , n}\left[T\left(t\right)-{T}_{0}\right]\right\}$

Wherein, F_{pf}(t) is used to represent the pulling force value of the pull-rod at the time t, N is used to indicate the total number of load sensors on the same cross-section of the pull-rod, K_{pf,n} is used to represent the pulling force coefficient of the n-th optical fiber load sensor, λₙ(t) is used to represent the wavelength value of the n-th load sensor at the time t, λ_{0,n} is used to represent the wavelength value of the n-th optical fiber load sensor when there is no load, k_{T,n} is used to represent the temperature drift coefficient of the n-th optical fiber load sensor, T(t)) is used to represent the temperature value at the time t, T₀ is used to represent the temperature value at the initial moment.

For the bending moment monitoring of the pull-rod 321, the structure of a load sensor for monitoring the tension of the pull-rod 321 can also be set, and then the comparison result of the bending moment when there is a load and when there is no load on the pull-rod 321 can be set to determine whether the current bending moment of the pull-rod 321 is within the normal bearing range or not.

Specifically, the load sensors are installed in pairs on the same section circumference of any section of the pull-rod, and the paired load sensors are centrally symmetrical, and the load signals are used to indicate the bending moment of the pull-rod; the processor uses the following formula to determine the bending moment value of the pull-rod: ${M}_{i , i - opp} \left(t\right) = {K}_{M , i} \left\{{λ}_{i}\left(t\right)-{λ}_{0 , i}+{k}_{T , i}\left[T\left(t\right)-{T}_{0}\right]\right\} - {K}_{M - opp , i - opp} \left\{{λ}_{opp , i - opp}\left(t\right)-{λ}_{0 - opp , i - opp}+{k}_{T - opp , i - opp}\left[T\left(t\right)-{T}_{0}\right]\right\}$

Wherein, $i = 1 , 2 , 3 , ⋯ , I , I = \frac{N}{2}$

Wherein, M_{i,i-opp}(t) is used to represent the bending moment value at the time t in the i,i-opp bending direction of the pull-rod, N is used to indicate the total number of load sensors on the same cross-section of the pull-rod, I is used to indicate the number of pairs of two load sensors on the same cross-section of the pull-rod, K_{M,i} is used to indicate the bending moment coefficient of the i-th load sensor of the pull-rod, λᵢ(t) is used to represent the wavelength value of the i-th optical fiber load sensor at the time t, λ_{0,i} is used to represent the wavelength value of the i-th optical fiber load sensor when there is no load, k_{T,i} is used to represent the temperature drift coefficient of the i-th optical fiber load sensor, K_{M-opp,i-opp} is used to indicate the bending moment coefficient of the optical fiber load sensor facing the i-th optical fiber load sensor of the pull-rod, λ_{opp,i-opp}(t) is used to represent the wavelength value of the i-th optical fiber load sensor facing the i-th optical fiber load sensor at the time t, λ_{0-opp,i-opp} is used to indicate the wavelength value of the i-th optical fiber load sensor facing the i-th optical fiber load sensor when there is no load, k_{T-opp,i-opp} is used to represent the temperature drift coefficient of the i-th optical fiber load sensor facing the i-th optical fiber load sensor, T(t) is used to represent the temperature value at the time t, T₀ is used to represent the temperature value at the initial moment.

In a specific implementation, since the first connecting shaft 331, the second connecting shaft 332, the third connecting shaft 333, and the fourth connecting shaft 334 all rotate, therefore, the inner angle and shape of the four-bar linkage structure will change by following the change of the height of the pantograph bow 34. When the upper arm 323, the lower arm 322, and the pull-rod 321 are subjected to force, a stuck state may occur, for example, it is difficult to restore after bending under the force.

Further, the optical fiber sensor may include at least one strain sensor to collect deformation signals, the pantograph may include the four-bar linkage structure and the base frame 31; the strain sensor may be installed in one or more of the following places: the upper arm 323 of the four-bar linkage structure, the lower arm 322 of the four-bar linkage structure, the pull-rod 321 of the four-bar linkage structure, and the base frame 31.

In the embodiment of the present disclosure, the strain sensor is installed at one or more of the following: the upper arm 323 of the four-bar linkage structure, the lower arm 322 of the four-bar linkage structure, the pull-rod 321 of the four-bar linkage structure, and the base frame 31. There is an opportunity to monitor the fatigue of the upper arm 323 of the four-bar linkage structure, the lower arm 322 of the four-bar linkage structure, the pull-rod 321 of the four-bar linkage structure, and the base frame 31 according to the deformation signals.

In specific implementations, optical fiber strain sensors can be arranged on the upper arm 323 and the lower arm 322 of the pantograph, as well as the key stress parts or/and the welding seam of the base frame of the pantograph 31. As the structural health monitoring of the pantograph framework, it can be used to monitor the fatigue of the upper arm 323, the lower arm 322 and the base frame 31 of the pantograph for a long time.

It should be pointed out that under normal circumstances, the height of the pantograph bow can work within a certain height range, for example, between 350mm and 2500mm. The lengths of L1, L2, L3, and L4 can be measured first, and the distance L5 from the center of the moment center of the pull-rod load sensor to the connecting shaft 332, and L6 is the distance between the connecting shaft 332 and the connecting shaft 334. Secondly, measure the internal angles α1, α2, β, θ1, and θ2 of the four-bar linkage mechanism at different heights (for example, every 50mm is a height) in the natural static ascending state of the pantograph bow without any pressure from the catenary line on the pantograph bow, then define α1 as the angle between L4 and L6, α2 is the angle between L2 and L6, β is the angle between L1 and L4, θ1 is the angle between L3 and L4, θ2 is the angle between L2 and L3.

Then, combined with the maximum driving torque value of the lower arm of the pantograph, that is, the maximum torque value of rotation around the axis 331, such as 1500N×m or 2000N×m, depending on different types of pantographs, the stuck tension value and the stuck bending moment value at the load sensor of the corresponding pull-rod are calculated separately when the ball hinge shaft 332 or shaft 333 at both ends of the pull-rod is completely stuck and cannot rotate in the case of different heights of the pantograph bow. Finally, combining the real-time measured tension value and bending moment value of the pull-rod load sensor, and comparing them with their own stuck tension value and stuck bending moment value in real time, in this way, it can be recognized in real time whether the spherical hinge shaft 332 and the shaft 333 at both ends of the pull-rod are stuck or not, so as to achieve real-time warning. In addition, through the positive and negative conditions of the bending moment value at the pull-rod load sensor, the bending direction of the middle of the pull-rod can be judged, and it is possible to distinguish whether the shaft 332 is stuck or the shaft 333 is stuck, that is, when the middle of the pull-rod protrudes inward to the frame of the four-bar linkage structure, the bending moment at the load sensor of the pull-rod is positive, and the shaft 332 is stuck at this time; on the contrary, when the middle of the pull-rod protrudes outwards to the frame of the four-bar linkage structure, the bending moment at the load sensor of the pull-rod is negative, and the shaft 333 is stuck at this time.

In addition, fiber optic strain sensors can be arranged on the upper and lower arms of the pantograph, as well as the key stress parts or/and the welding seams of the pantograph base frame. As the structural health monitoring of the pantograph framework, it can be used to monitor the fatigue of the upper arm, the lower arm and the base frame of the pantograph for a long time.

Further, the optical fiber sensor may include at least one air pressure sensor to collect air pressure signals, and the pantograph may include the air bellow and/or the air cylinder (not shown), a pneumatic control box 35, and the gas pipeline connected to the pneumatic control box 35 (not shown); the air pressure sensor can be installed at one or more of the following: the air bellow and/or the air cylinder, the inside or surface of the pneumatic control box 35, and the coupled air circuit pipeline.

In the embodiment of the present disclosure, the air pressure sensor can be installed in one or more of the following places: the air bellow and/or the air cylinder, the inside or surface of the pneumatic control box 35, and the coupled gas pipeline, which has the opportunity to monitor the pressure of the air bellow or cylinder of the pantograph according to the air pressure signal, and to monitor the failure of the ascending or/and falling state of the pantograph.

For monitoring the pressure of the air bellow or cylinder by coupling the gas pipeline, a three-way pipe can be installed on the gas pipeline in the pneumatic control box 35, and two ends of the three-way pipe are connected to the original gas pipeline, the remaining end is connected to the air pressure sensor to monitor the air pressure in the air bellow or cylinder of the pantograph in real time.

For the failure of the ascending or/and falling state of the pantograph, combined with some key information such as the pressure value in the air bellow or cylinder, the lifting height of the pantograph during operation, the contact force value between the catenary line and the pantograph bow 34, as well as the tension and the bending moment value of the pull-rod 321, it can comprehensively analyze and judge the cause of the failure of the ascending or/and falling state of the pantograph.

Further, the air pressure signal is used to indicate the air pressure value in the air bellow or air cylinder of the pantograph; the processor uses the following formula to determine the air pressure value in the air bellow or air cylinder the pantograph: ${P}_{A} \left(t\right) = {K}_{A} \left[λ\left(t\right)-{λ}_{0}+{k}_{T}\left(T\left(t\right)-{T}_{0}\right)\right]$

Wherein, P_{A}(t) is used to indicate the pressure value of the air bellow/ air cylinder at the time t, K_{A} is used to represent the pressure coefficient of the air pressure sensor, λ(t) is used to represent the wavelength value of the air pressure sensor at the time t, λ₀ is used to indicate the wavelength value of the air pressure sensor when air bellow/ air cylinder is not inflated, k_{T} is used to represent the temperature drift coefficient of the air pressure sensor, T(t) is used to represent the temperature value at the time t, T₀ is used to represent the temperature value at the initial moment.

It needs to be pointed out that for the arcing between the pantograph and catenary line mentioned above, in specific implementation, combined also with the optical fiber current sensor integrated in the accelerometer's housing, the optical fiber temperature sensor integrated in the contact force sensor's housing, and the optical fiber air pressure sensor integrated on the gas pipeline in the pneumatic control box, it can separately monitor the real-time temperature value, current value and air pressure value to comprehensively determine the occurrence of arcing between the pantograph and the catenary line.

The height of the catenary line mentioned above can be determined based on the pressure value of the air bellow/cylinder, and the air pressure value in the air bellow or the air cylinder can be determined based on the above formula.

Furthermore, the temperature sensor may be embedded inside the air pressure sensor, or the air pressure sensor may be coupled with the temperature sensor.

In the embodiment of the present disclosure, by setting the temperature sensor, temperature compensation and real-time temperature sensing can be realized.

Further, the pantograph may be selected from: the spring box type pantograph, the leaf spring type pantograph, and the tension spring type pantograph.

Specifically, the spring box type pantograph may be a buffer and/or damping system of the pantograph bow as a spring box type pantograph, the leaf spring type pantograph may be a buffer and/or damping system of the pantograph bow as a leaf spring type pantograph, the tension spring type pantograph may be the buffer and/or damping system of the pantograph bow as a tension spring type pantograph. The spring box type pantograph, the leaf spring type pantograph, and the tension spring type pantograph can be a pantograph with a four-bow-surpports and double-carbon-contact-strips, or an eight-bow-surpports and four-carbon-contact-strips, for example, every two bow supports support a carbon-contact-strip.

Further, depending on whether the bow-lifting driving device is the air bellow type, the cylinder type or the motor type, the pantograph in the embodiment of the present disclosure can be further divided into the air bellow type pantograph, the cylinder type pantograph or the motor type pantograph. Among them, the motor-type pantograph may not measure the air pressure sensor of the air bellow/cylinder.

Further, the installation method of the optical fiber sensor can be selected from: screw fastening, embedding, welding, pasting and implanting.

Wherein, the embedded fixing method may be to embed the optical fiber sensor in the gap of the inner cavity of the pantograph structure first, thereby improving the stability of the optical fiber sensor and saving space.

Wherein, the implantation method can be used on the surface of the inner wall or/and the outer wall of the pantograph structure or/and the preset recesses, then, the optical fiber sensor is implanted into the surface or/and the recess, thereby improving the stability of the optical fiber sensor and saving space.

In the embodiment of the present disclosure, the monitoring system may also include an optical fiber signal acquisition, processing and analysis unit, which may have a micro scanning laser inside, which has the ability to improve the spectral resolution and suppress background noise, and realize the multi-channel synchronous fine scanning of the reflected spectrum signal of the optical fiber sensors. Through photoelectric conversion and signal demodulating, the spectrum signal is converted into a standard voltage signal, and the Field-Programmable Gate Array (FPGA) controls the multi-channel analog-to-digital (A/D) conversion chip to complete the A/D signal conversion and spectrum analysis, the center wavelength value of the optical fiber sensor is obtained by the final calculation. Further, the scale factors characterized by the physical quantitywavelength, such as acceleration coefficient, contact-force coefficient, air bellow pressure coefficient, temperature coefficient, etc., as well as the aforementioned bending moment coefficient K_{M-opp,i-opp}, the pressure coefficient K_{A}, etc., are finally converted to obtain the measured physical values.

Further, the processor may include an FPGA and a multi-channel analog-to-digital conversion module; wherein, the FPGA is used to control the multi-channel analog-to-digital conversion module to complete analog-digital signal conversion and spectrum analysis, and output the wavelength value of each optical fiber sensor.

It should be pointed out that, the wavelength value output by the FPGA can be the wavelength value of the maximum light intensity within the bandwidth of the laser, when the comb-shaped spectrum output by the optical fiber sensor described above. It is understandable that, because there is only a single peak in the comb-shaped spectrum output by the optical fiber sensor in the present application, which is located within the bandwidth of the laser, there is only a single wavelength value when the light intensity is maximum.

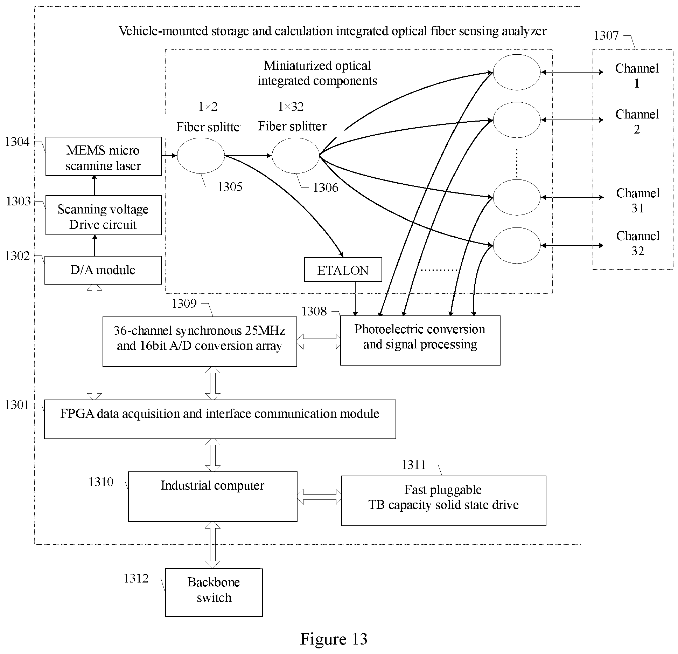

Referring to Figure 13, Figure 13 is a schematic diagram of an optical fiber sensing analyzer of a monitoring system for a pantograph in an embodiment of the present disclosure.

Wherein, the optical fiber sensing analyzer may have the characteristics of integrated storage and calculation on a vehicle, and may be installed on a vehicle.

Specifically, the optical fiber sensing analyzer may include FPGA data acquisition and interface communication module 1301, D/A conversion module 1302, scanning voltage signal driving circuit 1303, MEMS micro scanning laser 1304, 1×2 fiber splitter 1305, 1×32 fiber optic splitter 1306, photoelectric conversion and signal demodulating 1308, 36-channel synchronous 25MHz and 16bit A/D conversion array 1309, industrial computer (integrated storage and calculation information processor) 1310, fast pluggable TB capacity solid state memory 1311. Information exchange can also be carried out through the optical fiber sensing channel 1307 and the backbone network switch 1312.

Wherein, the optical fiber sensing channel 1307 and the optical fiber sensor in the embodiment of the present application can be connected by plugging or welding, etc., and used as a port for receiving and sending signals, the signal is of collecting, receiving and feedback by the optical fiber sensor.

It should be pointed out that, Figure 13 shows an optical fiber sensing analyzer with good effect in the specific application of this application, and the selection of specific parameters in each module does not constitute a specific limitation to the technical solution of the present disclosure.

Specifically, the optical fiber sensing analyzer may have an optical fiber signal acquisition, processing and analysis unit inside. Wherein, the optical fiber signal acquisition and processing unit may include a micro-scanning laser, such as a MEMS micro-scanning laser 1304. The scanning laser can improve the spectral resolution and background noise suppression capability, and realize the multi-channel synchronous fine scanning of the reflected spectrum signal of the optical fiber sensor.

The 1×2 fiber splitter 1305 and the 1×32 fiber splitter 1306 can split the optical signal of the scanning laser, and then use the fiber sensing channel 1307 to collect, analyze and process the signal of the scanning laser. For the specific processing method, please refer to the processing steps of the optical fiber sensor described above, which will not be repeated here.

Then the output signal of the optical fiber sensor can be obtained by photoelectric conversion and signal demodulating 1308. After data processing, input the A/D conversion array (such as 36-channel synchronous 25MHz and 16bit A/D conversion array 1309), and then input the converted data into FPGA data acquisition and interface communication module 1301.

Specifically, through photoelectric conversion and signal modulation and demodulation, the spectrum signal is converted into a standard voltage signal, and the multi-channel analog-to-digital (A/D) conversion chip is controlled by FPGA to complete the analog-digital signal conversion and spectrum analysis, the center wavelength value of the optical fiber sensor is obtained by the final calculation.

It should be pointed out that, the processor disclosed in the embodiment of the present disclosure may include the FPGA data acquisition and interface communication module 1301, D/A conversion module 1302, and 36-channel synchronous 25MHz and 16bit A/D conversion array 1309 shown in Figure 13, and may also include other appropriate modules, such as photoelectric conversion and signal demodulating 1308.

In other specific implementation manners of the embodiment of the present disclosure, the processor may also be a Central Processing Unit (CPU), and the processor may also be other general-purpose processors, DSP, and Application Specific Integrated Circuits (ASIC) or other programmable logic devices, discrete gates or transistor logic devices, discrete hardware components, etc. The general-purpose processor may be a microprocessor or the processor may also be any conventional processor or the like.

Furthermore, with regard to the selection of FPGA, compared with the prior art, which usually uses Digital Signal Processor (DSP) to collect and process signals, DSP can only be applied to the system with lower sampling rate or low data rate. Under the multi-condition process, especially the complex multi-algorithm task, it is often difficult to meet the demand. In the embodiment of the present disclosure, FPGA is used to collect and process signals up to Gbps, which are difficult for DSP to handle and can better collect and process the massive sampling data at the same time brought by the multi-channel synchronous scanning generated by the high-speed scanning laser in real time (the scanning frequency of general scanning lasers ranging from 1kHz to 100kHz is the high-speed scanning laser), and can directly output the center wavelength value signal. Therefore, FPAG is suitable for high-speed sampling frequencies, especially when tasks are relatively fixed or repetitive.

In the embodiment of the present disclosure, the processor may include an FPGA and a multi-channel analog-to-digital conversion module; wherein, the FPGA is used to control the multi-channel analog-to-digital conversion module to complete analog-digital signal conversion and spectral analysis, and output the wavelength value of each optical fiber sensor. Compared to the use of a digital signal processor to collect and process the signal, DSP can only be applied to the multi-conditional process and multi-algorithm task under the system's lower sampling rate or low data rate. The FPGA can be used to collect and process the high data rate signals which are difficult for DSP to handle, such as Gbps signals or even higher data rates, which can better collect and process the massive sampling data at the same time caused by the simultaneous scanning of multichannels generated by high-speed scanning lasers in real time, and the wavelength value can be output directly. Wherein, the wavelength value is the wavelength value when the light intensity of the comb-shaped spectrum output by the optical fiber sensor is the maximum within the bandwidth of the laser, because there is only a single peak in the comb-shaped spectrum output by the optical fiber sensor in the present application. Therefore, only the wavelength value at the maximum intensity of a single light is used for output.

The optical fiber sensing analyzer may also include an industrial computer (integrated information processor with storage and calculation) 1310, which can directly pass the wavelength signal output by the FPGA through an embedded algorithm, that is, the scale factor represented by the physical quantity-the central wavelength value, into the corresponding physical quantity signals, such as acceleration signals, contact-force signals, temperature signals, load signals, air pressure signals and deformation signals generated by various sensors installed on the pantograph. Then, combined with the time information and space information of the data, the calculated physical quantity signal is quickly recorded in the memory, for example, a solid-state memory 1311 with a TB capacity can be quickly plugged in.

The memory in the embodiments of the present application may be volatile memory or non-volatile memory, or may include both volatile and non-volatile memory. Among them, non-volatile memory can be read-only memory (read-only memory, ROM), programmable read-only memory (programmable ROM, PROM), erasable programmable read-only memory (erasable PROM, EPROM), and Erase programmable read-only memory (electrically EPROM, EEPROM) or flash memory. Volatile memory may be random access memory (RAM), which is used as an external cache. By way of exemplary but not restrictive description, many forms of random access memory (RAM) are available, such as static random access memory (static RAM, SRAM), dynamic random access memory (DRAM), and synchronous dynamic random access memory (DRAM). Access memory (synchronous DRAM, SDRAM), double data rate synchronous dynamic random access memory (double data rate SDRAM, DDR SDRAM), enhanced synchronous dynamic random access memory (enhanced SDRAM, ESDRAM), synchronous connection dynamic random access memory Take memory (synchlink DRAM, SLDRAM) and direct memory bus random access memory (direct rambus RAM, DR RAM).

Specifically, the optical fiber signal acquisition, processing and analysis unit with integrated storage and calculation technology can realize the conventional physical quantity sensing measurement based on the demodulation of the spectral wavelength signal of the MEMS optical fiber sensor. Through the FPGA's built-in ARM CORE and low-latency phase change memory, the spectral wavelength demodulation to the vibration signal solution, and further FFT signal transformation is carried out, to realize frequency domain and time domain signal analysis, and also anomaly detection technology based on prediction, to establish a loop of self-learning, prediction, comparison and correction of the fault model by the front-end, and to realize the integration of storage and calculation of optical fiber signal acquisition processing and analysis unit which has the failure model storage and prediction calculation integration.

It should be pointed out that, in the specific implementation of the embodiment of the present disclosure, external information, such as the door opening and closing signal of the vehicle, can also be obtained through the backbone network switch 1312, so as to improve the accuracy of obtaining the spatial information of the vehicle.

In the embodiment of the present disclosure, an optical fiber sensor is also provided, the optical fiber sensor may be used to receive laser signals, and the optical fiber sensor may include: an optical interference cavity, the laser signal enters the optical interference cavity to form a comb-shaped spectrum, and the cavity length of the optical interference cavity satisfies the following formula: $\frac{{k}_{mid}}{2} \left({λ}_{ctr}-\frac{{W}_{laser}}{2}\right) < {l}_{FP} < \frac{{k}_{mid}}{2} \left({λ}_{ctr}+\frac{{W}_{laser}}{2}\right)$ ${W}_{laser} \leq \frac{2 {l}_{FP}}{{k}_{mid}^{2} - 1}$

Wherein, *l_{FP}* is used to represent the cavity length of the optical interference cavity; *k_{mid}* is used to represent the preset longitudinal modulus of the optical fiber sensor, the value range of *k_{mid}* is a positive integer, and *k_{mid}* ≥2; *Wₗₐₛₑᵣ* is used to represent the bandwidth of the laser emitting the laser signal; *λ_{ctr}* is used to represent the wavelength value of the center point of the bandwidth of the laser. The optical interference cavity includes mirrors at both ends of the cavity, and the cavity length of the optical interference cavity is the distance between the two mirrors.

The cavity length of the optical interference cavity satisfies the following formula: ${l}_{ctr} = {k}_{mid} \frac{{λ}_{ctr}}{2}$ wherein, *l_{ctr}* is used to represent the cavity length of the optical interference cavity.

In the embodiment of the present disclosure, according to the bandwidth of the laser emitting the laser signal, the wavelength value of the center point of the bandwidth of the laser, and the preset longitudinal modulus of the optical fiber sensor, the cavity length of the optical interference cavity can be determined by a formula, so that only a single peak in the comb-shaped spectrum output from the optical interference cavity is located within the bandwidth of the laser, so that the signal interference of adjacent peaks to the wave peak in the bandwidth of the laser is avoided during process of the data analysis, and cross-code is effectively prevented.

For the principle, specific implementation and beneficial effects of the optical fiber sensor, please refer to the relevant description of the pantograph monitoring system described above, which will not be repeated here. space information of the data, the calculated physical quantity signal is quickly recorded in the memory, for example, a solid-state memory 1311 with a TB capacity can be quickly plugged in.

The memory in the embodiments of the present application may be volatile memory or non-volatile memory, or may include both volatile and non-volatile memory. Among them, non-volatile memory can be read-only memory (read-only memory, ROM), programmable read-only memory (programmable ROM, PROM), erasable programmable read-only memory (erasable PROM, EPROM), and Erase programmable read-only memory (electrically EPROM, EEPROM) or flash memory. Volatile memory may be random access memory (RAM), which is used as an external cache. By way of exemplary but not restrictive description, many forms of random access memory (RAM) are available, such as static random access memory (static RAM, SRAM), dynamic random access memory (DRAM), and synchronous dynamic random access memory (DRAM). Access memory (synchronous DRAM, SDRAM), double data rate synchronous dynamic random access memory (double data rate SDRAM, DDR SDRAM), enhanced synchronous dynamic random access memory (enhanced SDRAM, ESDRAM), synchronous connection dynamic random access memory Take memory (synchlink DRAM, SLDRAM) and direct memory bus random access memory (direct rambus RAM, DR RAM).

Specifically, the optical fiber signal acquisition, processing and analysis unit with integrated storage and calculation technology can realize the conventional physical quantity sensing measurement based on the demodulation of the spectral wavelength signal of the MEMS optical fiber sensor. Through the FPGA's built-in ARM CORE and low-latency phase change memory, the spectral wavelength demodulation to the vibration signal solution, and further FFT signal transformation is carried out, to realize frequency domain and time domain signal analysis, and also anomaly detection technology based on prediction, to establish a loop of self-learning, prediction, comparison and correction of the fault model by the front-end, and to realize the integration of storage and calculation of optical fiber signal acquisition processing and analysis unit which has the failure model storage and prediction calculation integration.

It should be pointed out that, in the specific implementation of the embodiment of the present disclosure, external information, such as the door opening and closing signal of the vehicle, can also be obtained through the backbone network switch 1312, so as to improve the accuracy of obtaining the spatial information of the vehicle.

In the embodiment of the present disclosure, an optical fiber sensor is also provided, the optical fiber sensor may be used to receive laser signals, and the optical fiber sensor may include: an optical interference cavity, the laser signal enters the optical interference cavity to form a comb-shaped spectrum, and the cavity length of the optical interference cavity satisfies the following formula: $\frac{{k}_{mid}}{2} \left({λ}_{ctr}-\frac{{W}_{laser}}{2}\right) < {l}_{FP} < \frac{{k}_{mid}}{2} \left({λ}_{ctr}+\frac{{W}_{laser}}{2}\right)$ ${W}_{laser} \leq \frac{2 {l}_{FP}}{{k}_{mid}^{2} - 1}$

Wherein, *l_{FP}* is used to represent the cavity length of the optical interference cavity; *k_{mid}* is used to represent the preset longitudinal modulus of the optical fiber sensor, the value range of *k_{mid}* is a positive integer, and *k_{mid}* ≥2; *Wₗₐₛₑᵣ* is used to represent the bandwidth of the laser emitting the laser signal; *λ_{ctr}* is used to represent the wavelength value of the center point of the bandwidth of the laser. The optical interference cavity includes mirrors at both ends of the cavity, and the cavity length of the optical interference cavity is the distance between the two mirrors.

The cavity length of the optical interference cavity satisfies the following formula: ${l}_{ctr} = {k}_{mid} \frac{{λ}_{ctr}}{2}$ wherein, *l_{ctr}* is used to represent the cavity length of the optical interference cavity.

In the embodiment of the present disclosure, according to the bandwidth of the laser emitting the laser signal, the wavelength value of the center point of the bandwidth of the laser, and the preset longitudinal modulus of the optical fiber sensor, the cavity length of the optical interference cavity can be determined by a formula, so that only a single peak in the comb-shaped spectrum output from the optical interference cavity is located within the bandwidth of the laser, so that the signal interference of adjacent peaks to the wave peak in the bandwidth of the laser is avoided during process of the data analysis, and cross-code is effectively prevented.

For the principle, specific implementation and beneficial effects of the optical fiber sensor, please refer to the relevant description of the pantograph monitoring system described above, which will not be repeated here.

## Claims

1. A monitoring system for a pantograph, comprising one or more optical fiber sensors (101, 102, 103), installed on the pantograph for receiving laser signal; and
a processor (110), coupled to the optical fiber sensors (101, 102, 103), and configured to process the laser signal collected by the optical fiber sensors (101, 102, 103);
wherein each optical fiber sensor (101, 102, 103) has an optical interference cavity, the laser signal enters the optical interference cavity to form a comb-shaped spectrum, and a cavity length of the optical interference cavity satisfies following formula: $\frac{{k}_{mid}}{2} \left({λ}_{ctr}-\frac{{W}_{laser}}{2}\right) < {l}_{FP} < \frac{{k}_{mid}}{2} \left({λ}_{ctr}+\frac{{W}_{laser}}{2}\right)$ ${W}_{laser} \leq \frac{2 {l}_{FP}}{{k}_{mid}^{2} - 1}$
wherein *l_{FP}* represents the cavity length of the optical interference cavity, *k_{mid}* represents a preset longitudinal modulus of the optical fiber sensor, *k_{mid}* is a positive integer and *k_{mid}* ≥2, *Wₗₐₛₑᵣ* represents a bandwidth of a laser emitting the laser signal, and *λ_{ctr}* represents a wavelength value of a center point of the bandwidth of the laser; and
wherein the optical interference cavity comprises two mirrors (21) respectively disposed at both ends of the optical interference cavity, and the cavity length of the optical interference cavity is a distance between the two mirrors (21);
**characterized in that** the monitoring system comprises, as the one or more optical fiber sensors at least one contact-force sensor to collect a pressure signal, at least one load sensor to collect a load signal, at least one accelerometer to collect an acceleration signal, at least one current sensor to collect a current signal, at least one temperature sensor to collect a temperature signal and at least one air pressure sensor to collect an air pressure signal;
wherein only a single peak in the comb-shaped spectrum output from the optical interference cavity is located within the bandwidth of the laser.

2. The monitoring system according to claim 1, **characterized in that** the cavity length of the optical interference cavity satisfies following formula: ${l}_{ctr} = {k}_{mid} \frac{{λ}_{ctr}}{2}$ wherein *I_{ctr}* represents the cavity length of the optical interference cavity.

3. The monitoring system according to claim 1, **characterized in that** the optical fiber sensor (101, 102, 103) is a passive sensor.

4. The monitoring system according to claim 1, **characterized in that** the pantograph comprises one or more pantograph bows (34), and each pantograph bow (34) comprises a bow support (342);
wherein for pantograph bows (34) equipped with contact-force sensors, the contact-force sensors are installed inside or on a surface of bow supports (342).

5. The monitoring system according to claim 4, **characterized in that** the pressure signal is used to indicate a contact-force between the pantograph bow (34) and a catenary line; and
the contact-force between the pantograph bow (34) and the catenary line is determined by the processor (110) using following formula: ${F}_{S , i , j} \left(t\right) = {K}_{S , i , j} \left[{λ}_{i , j}\left(t\right)-{λ}_{0 , i , j}+{k}_{T , i , j}\left(T\left(t\right)-{T}_{0}\right)\right]$ ${F}_{cp} \left(t\right) = {\sum }_{i = 1}^{{N}_{C}} {\sum }_{j = 1}^{{N}_{S} = 2} {F}_{S , i , j} \left(t\right)$
wherein F_{S,ij}(t) represents a value of the contact-force at time t between the catenary line and the contact-force sensor on the j-th bow support of the i-th carbon-contact-strip structure of the pantograph bow, K_{S,i,j} represents a contact-force coefficient of the j-th contact-force sensor of the i-th carbon-contact-strip structure, λ_{i,j}(t) represents a wavelength value of the j-th contact-force sensor of the i-th carbon-contact-strip structure at the time t, λ_{0,i,j} represents the wavelength value of the j-th contact-force sensor of the i-th carbon-contact-strip structure when there is no mutual force between the pantograph bow and the catenary line, k_{T,i,j} represents a temperature drift coefficient of the j-th contact-force sensor of the i-th carbon-contact-strip structure, T(t) represents a temperature value at the time t, T₀ represents an initial temperature value, F_{cp}(t) represents a value of the contact-force at the time t between the pantograph bow and the catenary line, Nc represents the number of the carbon-contact-strip structures on the pantograph bows, and N_{S} represents the number of the bow supports on the same carbon-contact-strip.

6. The monitoring system according to claim 1, **characterized in that** the pantograph comprises one or more pantograph bows (34), wherein each pantograph bow (34) comprises a carbon-contact-strip (341), bow supports (342) respectively connected to both ends of the carbon-contact-strip (341), and connecting parts for connecting the carbon-contact-strip (341) and each bow support (342);
for pantograph bows (34) equipped with accelerometers, the accelerometers are installed in one or more of the following places:
inside or on the surface of the bow supports (342), and on the connecting parts.

7. The monitoring system according to claim 6, **characterized in that** the pantograph comprises one or more pantograph bows (34), wherein each pantograph bow (34) comprises bow supports (342); for a pantograph bow (34) equipped with contact-force sensors, the contact-force sensor is installed inside or on the surface of the bow support (342);
the pressure signal is used to indicate a contact-force between the pantograph bow (34) and a catenary line;
the acceleration signal is used to indicate an acceleration of at least one pantograph bow (34) in a horizontal direction and an acceleration of at least one pantograph bow (34) in a vertical direction;
the processor (110) uses following formulas to determine an acceleration value of the pantograph bow (34) in the vertical direction and the contact-force between the pantograph bow (34) and the catenary line: ${a}_{V} \left(t\right) = {K}_{V} \left[{λ}_{V}\left(t\right)-{λ}_{0 , V}+{k}_{T , V}\left(T\left(t\right)-{T}_{0}\right)\right]$ ${F}_{S} \left(t\right) = {K}_{S} \left[{λ}_{S}\left(t\right)-{λ}_{0 , S}+{k}_{T , S}\left(T\left(t\right)-{T}_{0}\right)\right]$
wherein a_{V}(t) represents an acceleration value of the pantograph bow in the vertical direction at time t, K_{V} represents an acceleration coefficient of the accelerometer in the vertical direction, λ_{V}(t) represents a wavelength value of the accelerometer in the vertical direction at the time t, λ_{0,V} represents a wavelength value of the accelerometer in the vertical direction in a static state, k_{T,V} represents a temperature drift coefficient of the accelerometer in the vertical direction, F_{S}(t) represents a contact-force value between a contact-force sensor and the catenary line at the time t, K_{S} represents a contact-force coefficient of the contact-force sensor, λ_{S}(t) represents a wavelength value of the contact-force sensor at the time t, λ_{0,S} is used to indicate the wavelength value of the contact-force sensor when there is no mutual force between the pantograph bow and the catenary line, k_{T,S} represents a temperature drift coefficient of the contact-force sensor, T(t) represents a temperature value T at the time t, and T₀ represents an initial temperature value.

8. The monitoring system according to claim 6, **characterized in that** the pantograph comprises one or more pantograph bows (34), wherein each pantograph bow (34) comprises bow supports (342); for a pantograph bow (34) equipped with a contact-force sensor, the contact-force sensor is installed inside or on the surface of the bow support (342);
the pressure signal is used to indicate a contact-force between the pantograph bow (34) and the catenary line;
the acceleration signal is used to indicate an acceleration of at least one pantograph bow (34) in a longitudinal direction;
the processor uses following formula to determine a stagger of the catenary line: ${Z}_{C} \left(t\right) = {L}_{S} \left(\frac{{F}_{S , i , gch} \left(t\right)}{{F}_{S , i , drg} \left(t\right) + {F}_{S , i , gch} \left(t\right)}-\frac{1}{2}\right) , i = 1 , 2 , 3 , 4$ or, ${Z}_{C} \left(t\right) = {L}_{S} \left(\frac{1}{2}-\frac{{F}_{S , i , drg} \left(t\right)}{{F}_{S , i , drg} \left(t\right) + {F}_{S , i , gch} \left(t\right)}\right) , i = 1 , 2 , 3 , 4$ ${ν}_{L} \left(t\right) = {ν}_{0 , L} + {\int }_{0}^{t} {a}_{L} \left(t\right) dt$ ${D}_{L} \left(t\right) = {D}_{0 , L} + {\int }_{0}^{t} {ν}_{L} \left(t\right) dt$
wherein, Z_{C}(t) represents the stagger of the catenary line at time t, Z_{C} is a negative value on a right side of a train's forward direction, Z_{C} is a positive value on a left side of the train's forward direction, L_{S} represents a distance between a center of the bow supports with a buffer or/and damping system at both ends of the same carbon-contact-strip, F_{S},i,drg and F_{S},i,gch respectively represent contact-force values between the catenary line and the contact-force sensors installed on the right and left bow supports of the i-th carbon-contact-strip of the pantograph bow, v_{L}(t) represents a speed value of the pantograph bow in the longitudinal direction at the time t, v_{0,L} represents an initial velocity of the pantograph bow in the longitudinal direction, a_{L}(t) represents an acceleration value a_{L} of the pantograph bow in the longitudinal direction at the time t, D_{L}(t) represents a travel distance of the train at the time t, and D_{0,L} represents an initial travel distance of the train.

9. The monitoring system according to claim 1, **characterized in that** the pantograph comprises a four-bar linkage structure; and
the load sensors are installed on one or more of the following places:
an upper arm (323) of the four-bar linkage structure, a lower arm (322) of the four-bar linkage structure, and a pull rod (321) of the four-bar linkage structure.

10. The monitoring system according to claim 9, **characterized in that**
the load sensors are installed on the same section circumference of any section of the pull rod, and the load signal is used to indicate a tension of the pull rod (321);
the processor (110) uses the following formula to determine a tension value of the pull rod (321): ${F}_{pf} \left(t\right) = {\sum }_{n = 1}^{N} {K}_{pf , n} \left\{{λ}_{n}\left(t\right)-{λ}_{0 , n}+{k}_{T , n}\left[T\left(t\right)-{T}_{0}\right]\right\}$
wherein F_{pf}(t) represents the tension value of the pull rod (321) at time t, N represents the total number of load sensors on the same cross-section of the pull rod (321), K_{pf,n} represents a tension coefficient of the n-th optical fiber load sensor, λₙ(t) represents a wavelength value of the n-th load sensor at the time t, λ_{0,n} represents the wavelength value of the n-th optical fiber load sensor when there is no load, k_{T,n} represents a temperature drift coefficient of the n-th optical fiber load sensor, T(t)) represents a temperature value at the time t, and T₀ represents the temperature value at the initial moment.

11. The monitoring system according to claim 9, **characterized in that** the load sensors are installed in pairs on the same section circumference of any section of the pull rod (321), and the pair of load sensors are centrally symmetrical, and the load signal is used to indicate a bending moment of the pull rod (321);
the processor (110) uses the following formula to determine a bending moment value of the pull rod (321): ${M}_{i , i - opp} \left(t\right) = {K}_{M , i} \left\{{λ}_{i}\left(t\right)-{λ}_{0 , i}+{k}_{T , i}\left[T\left(t\right)-{T}_{0}\right]\right\} - {K}_{M - opp , i - opp} \left\{{λ}_{opp , i - opp}\left(t\right)-{λ}_{0 - opp , i - opp}+{k}_{T - opp , i - opp}\left[T\left(t\right)-{T}_{0}\right]\right\}$
wherein $i = 1 , 2 , 3 , ⋯ , I , I = \frac{N}{2} ;$
wherein M_{i,i-opp}(t) represents the bending moment value at the time t in an i,i-opp bending direction of the pull rod (321), N represents the total number of load sensors on the same cross-section of the pull rod (321), I represents the number of pairs of two load sensors on the same cross-section of the pull-rod (321), K_{M,i} represents a bending moment coefficient of the i-th load sensor of the pull rod (321), λᵢ(t) represents a wavelength value of the i-th optical fiber load sensor at the time t, λ_{0,i} represents the wavelength value of the i-th optical fiber load sensor when there is no load, k_{T,i} represents a temperature drift coefficient of the i-th optical fiber load sensor, K_{M-opp,i-opp} represents the bending moment coefficient of the optical fiber load sensor facing the i-th optical fiber load sensor of the pull-rod (321), λ_{opp,i-opp}(t) represents a wavelength value of the i-th optical fiber load sensor facing the i-th optical fiber load sensor at the time t, λ_{0-opp,i-opp} represents the wavelength value of the i-th optical fiber load sensor facing the i-th optical fiber load sensor when there is no load, k_{T-opp,i-opp} represents a temperature drift coefficient of the i-th optical fiber load sensor facing the i-th optical fiber load sensor, T(t) represents a temperature value at the time t, and represents the temperature value at the initial moment.

12. The monitoring system according to claim 1, **characterized in that**
the pantograph comprises an air bellow and/or an air cylinder, a pneumatic control box (35), and an gas pipeline connecting the pneumatic control box;
the air pressure sensor is installed on one or more of the following places:
the air bellow and/or the air cylinder, an inside or a surface of the pneumatic control box (35), or coupled with the gas pipeline.

13. The monitoring system according to claim 12, **characterized in that** the pantograph is selected from a group comprising a spring-barrel-type pantograph, a leaf-spring-type pantograph, and a tension-spring-type pantograph.

14. The monitoring system according to claim 1, **characterized in that** the optical fiber sensors (101, 102, 103) are installed by screw fastening, embedding, welding, pasting or implanting.

## Patentansprüche

1. Überwachungssystem für einen Stromabnehmer, umfassend:
einen oder mehrere faseroptische Sensoren (101, 102, 103), die auf dem Stromabnehmer zum Empfangen eines Lasersignals installiert sind; und
einen Prozessor (110), der mit den faseroptischen Sensoren (101, 102, 103) gekoppelt und ausgebildet ist, das von den faseroptischen Sensoren (101, 102, 103) erfasste Lasersignal zu verarbeiten;
wobei jeder faseroptische Sensor (101, 102, 103) eine optische Interferenzkavität aufweist, das Lasersignal in die optische Interferenzkavität eintritt, um ein kammförmiges Spektrum zu bilden, und eine Kavitätslänge der optischen Interferenzkavität die folgende Formel erfüllt: $\frac{{k}_{mid}}{2} \left({λ}_{ctr}-\frac{{W}_{laser}}{2}\right) < {l}_{FP} < \frac{{k}_{mid}}{2} \left({λ}_{ctr}+\frac{{W}_{laser}}{2}\right)$ ${W}_{laser} \leq \frac{2 {l}_{FP}}{{k}_{mid}^{2} - 1}$
wobei *l_{FP}* die Kavitätslänge der optischen Interferenzkavität darstellt, *k_{mid}* ein voreingestelltes Longitudinalmodul des faseroptischen Sensors darstellt, *k_{mid}* eine positive ganze Zahl ist und *k_{mid}*≥2, *Wₗₐₛₑᵣ* eine Bandbreite eines Lasers darstellt, der das Lasersignal emittiert, und *λ_{ctr}* einen Wellenlängenwert eines Mittelpunktes der Bandbreite des Lasers darstellt; und
wobei die optische Interferenzkavität zwei Spiegel (21) umfasst, die jeweils an beiden Enden der optischen Interferenzkavität angeordnet sind, und die Kavitätslänge der optischen Interferenzkavität ein Abstand zwischen den zwei Spiegeln (21) ist;
**dadurch gekennzeichnet, dass** das Überwachungssystem als den einen oder die mehreren faseroptischen Sensoren mindestens einen Kontaktkraftsensor zum Erfassen eines Drucksignals, mindestens einen Lastsensor zum Erfassen eines Lastsignals, mindestens einen Beschleunigungssensor zum Erfassen eines Beschleunigungssignals, mindestens einen Stromsensor zum Erfassen eines Stromsignals, mindestens einen Temperatursensor zum Erfassen eines Temperatursignals und mindestens einen Luftdrucksensor zum Erfassen eines Luftdrucksignals umfasst;
wobei sich nur ein einzelner Peak in dem aus der optischen Interferenzkavität ausgegebenen kammförmigen Spektrum innerhalb der Bandbreite des Lasers befindet.

2. Überwachungssystem nach Anspruch 1, **dadurch gekennzeichnet, dass** die Kavitätslänge der optischen Interferenzkavität die folgende Formel erfüllt: ${l}_{ctr} = {k}_{mid} \frac{{λ}_{ctr}}{2}$ wobei *l_{ctr}* die Kavitätslänge der optischen Interferenzkavität darstellt.

3. Überwachungssystem nach Anspruch 1, **dadurch gekennzeichnet, dass** der faseroptische Sensor (101, 102, 103) ein passiver Sensor ist.

4. Überwachungssystem nach Anspruch 1, **dadurch gekennzeichnet, dass** der Stromabnehmer eine oder mehrere Stromabnehmerwippen (34) umfasst, und jede Stromabnehmerwippe (34) eine Wippenstütze (342) umfasst;
wobei bei Stromabnehmerwippen (34), die mit Kontaktkraftsensoren ausgestattet sind, die Kontaktkraftsensoren innerhalb von oder auf einer Oberfläche von Wippenstützen (342) installiert sind.

5. Überwachungssystem nach Anspruch 4, **dadurch gekennzeichnet, dass** das Drucksignal verwendet wird, um eine Kontaktkraft zwischen der Stromabnehmerwippe (34) und einer Fahrleitung anzuzeigen; und die Kontaktkraft zwischen der Stromabnehmerwippe (34) und der Fahrleitung wird durch den Prozessor (110) unter Verwendung der folgenden Formel bestimmt: ${F}_{S , i , j} \left(t\right) = {K}_{S , i , j} \left[{λ}_{i , j}\left(t\right)-{λ}_{0 , i , j}+{k}_{T , i , j}\left(T\left(t\right)-{T}_{0}\right)\right]$ ${F}_{cp} \left(t\right) = {\sum }_{i = 1}^{{N}_{C}} {\sum }_{j = 1}^{{N}_{S} = 2} {F}_{S , i , j} \left(t\right)$
wobei F_{S,i,j}(t) einen Wert der Kontaktkraft zum Zeitpunkt t zwischen der Fahrleitung und dem Kontaktkraftsensor auf der j-ten Wippenstütze der i-ten Kohleschleifleistenanordnung der Stromabnehmerwippe darstellt, K_{S,i,j} einen Kontaktkraftkoeffizienten des j-ten Kontaktkraftsensors der i-ten Kohleschleifleistenanordnung darstellt,
λ_{i,j}(t) einen Wellenlängenwert des j-ten Kontaktkraftsensors der i-ten Kohleschleifleistenanordnung zum Zeitpunkt t darstellt, λ_{0,i,j} den Wellenlängenwert des j-ten Kontaktkraftsensors der i-ten Kohleschleifleistenanordnung darstellt, wenn keine gegenseitige Kraft zwischen der Stromabnehmerwippe und der Fahrleitung vorhanden ist, k_{T,i,j} einen Temperaturdriftkoeffizienten des j-ten Kontaktkraftsensors der i-ten Kohleschleifleistenanordnung darstellt, T(t) einen Temperaturwert zum Zeitpunkt t darstellt, T₀ einen Anfangstemperaturwert darstellt, F_{cp}(t) einen Wert der Kontaktkraft zum Zeitpunkt t zwischen der Stromabnehmerwippe und der Fahrleitung darstellt, N_{C} die Anzahl der Kohleschleifleistenanordnungen auf den Stromabnehmerwippen darstellt, und N_{S} die Anzahl der Wippenstützen auf derselben Kohleschleifleiste darstellt.

6. Überwachungssystem nach Anspruch 1, **dadurch gekennzeichnet, dass** der Stromabnehmer eine oder mehrere Stromabnehmerwippen (34) umfasst, wobei jede Stromabnehmerwippe (34) eine Kohleschleifleiste (341), Wippenstützen (342), die jeweils mit beiden Enden der Kohleschleifleiste (341) verbunden sind, und Verbindungsteile zum Verbinden der Kohleschleifleiste (341) und jeder Wippenstütze (342) umfasst;
bei Stromabnehmerwippen (34), die mit Beschleunigungssensoren ausgestattet sind, sind die Beschleunigungssensoren an einem oder mehreren der folgenden Orte installiert:
innerhalb oder auf der Oberfläche von Wippenstützen (342), und auf den Verbindungsteilen.

7. Überwachungssystem nach Anspruch 6, **dadurch gekennzeichnet, dass** der Stromabnehmer eine oder mehrere Stromabnehmerwippen (34) umfasst, wobei jede Stromabnehmerwippe (34) Wippenstützen (342) umfasst; bei einer Stromabnehmerwippe (34), die mit Kontaktkraftsensoren ausgestattet ist, ist der Kontaktkraftsensor innerhalb oder auf der Oberfläche der Wippenstütze (342) installiert;
das Drucksignal wird verwendet, um eine Kontaktkraft zwischen der Stromabnehmerwippe (34) und einer Fahrleitung anzuzeigen;
das Beschleunigungssignal wird verwendet, um eine Beschleunigung von mindestens einer Stromabnehmerwippe (34) in einer Horizontalrichtung und eine Beschleunigung von mindestens einer Stromabnehmerwippe (34) in einer Vertikalrichtung anzuzeigen;
der Prozessor (110) die folgenden Formeln verwendet, um einen Beschleunigungswert der Stromabnehmerwippe (34) in der Vertikalrichtung und die Kontaktkraft zwischen der Stromabnehmerwippe (34) und der Fahrleitung zu bestimmen: ${a}_{V} \left(t\right) = {K}_{V} \left[{λ}_{V}\left(t\right)-{λ}_{0 , V}+{k}_{T , V}\left(T\left(t\right)-{T}_{0}\right)\right]$ ${F}_{S} \left(t\right) = {K}_{S} \left[{λ}_{S}\left(t\right)-{λ}_{0 , S}+{k}_{T , S}\left(T\left(t\right)-{T}_{0}\right)\right]$
wobei a_{V}(t) einen Beschleunigungswert der Stromabnehmerwippe in der Vertikalrichtung zum Zeitpunkt t darstellt, K_{V} einen Beschleunigungskoeffizienten des Beschleunigungssensors in der Vertikalrichtung darstellt, λ_{V}(t) einen Wellenlängenwert des Beschleunigungssensors in der Vertikalrichtung zum Zeitpunkt t darstellt, λ_{0,V} einen Wellenlängenwert des Beschleunigungssensors in der Vertikalrichtung in einem statischen Zustand darstellt, k_{T,V} einen Temperaturdriftkoeffizienten des Beschleunigungssensors in der Vertikalrichtung darstellt, F_{S}(t) einen Kontaktkraftwert zwischen einem Kontaktkraftsensor und der Fahrleitung zum Zeitpunkt t darstellt, K_{S} einen Kontaktkraftkoeffizienten des Kontaktkraftsensors darstellt, λ_{S}(t) einen Wellenlängenwert des Kontaktkraftsensors zum Zeitpunkt t darstellt, λ_{0,S} verwendet wird, um den Wellenlängenwert des Kontaktkraftsensors anzuzeigen, wenn keine gegenseitige Kraft zwischen der Stromabnehmerwippe und der Fahrleitung vorhanden ist, k_{T,S} einen Temperaturdriftkoeffizienten des Kontaktkraftsensors darstellt, T(t) einen Temperaturwert T zum Zeitpunkt t darstellt, und T₀ einen Anfangstemperaturwert darstellt.

8. Überwachungssystem nach Anspruch 6, **dadurch gekennzeichnet, dass** der Stromabnehmer eine oder mehrere Stromabnehmerwippen (34) umfasst, wobei jede Stromabnehmerwippe (34) Wippenstützen (342) umfasst; bei einer Stromabnehmerwippe (34), die mit einem Kontaktkraftsensor ausgestattet ist, ist der Kontaktkraftsensor innerhalb oder auf der Oberfläche der Wippenstütze (342) installiert;
das Drucksignal wird verwendet, um eine Kontaktkraft zwischen der Stromabnehmerwippe (34) und der Fahrleitung anzuzeigen;
das Beschleunigungssignal wird verwendet, um eine Beschleunigung von mindestens einer Stromabnehmerwippe (34) in einer Längsrichtung anzuzeigen; der Prozessor die folgende Formel verwendet, um eine Seitenlage der Fahrleitung zu bestimmen: ${Z}_{C} \left(t\right) = {L}_{S} \left(\frac{{F}_{S , i , gch} \left(t\right)}{{F}_{S , i , drg} \left(t\right) + {F}_{S , i , gch} \left(t\right)}-\frac{1}{2}\right) , i = 1 , 2 , 3 , 4$
oder, ${Z}_{C} \left(t\right) = {L}_{S} \left(\frac{1}{2}-\frac{{F}_{S , i , drg} \left(t\right)}{{F}_{S , i , drg} \left(t\right) + {F}_{S , i , gch} \left(t\right)}\right) , i = 1 , 2 , 3 , 4$ ${ν}_{L} \left(t\right) = {ν}_{0 , L} + {\int }_{0}^{t} {a}_{L} \left(t\right) dt$ ${D}_{L} \left(t\right) = {D}_{0 , L} + {\int }_{0}^{t} {ν}_{L} \left(t\right) dt$
wobei Z_{C}(t) die Seitenlage der Fahrleitung zum Zeitpunkt t darstellt, Z_{C} ein negativer Wert auf einer rechten Seite einer Vorwärtsrichtung eines Zugs ist, Z_{C} ein positiver Wert auf einer linken Seite der Vorwärtsrichtung des Zugs ist, L_{S} einen Abstand zwischen einem Zentrum der Wippenstützen mit einem Puffer- und/oder Dämpfungssystem an beiden Enden derselben Kohleschleifleiste darstellt, F_{S,i,drg} und F_{S,i,gch} jeweils Kontaktkraftwerte zwischen der Fahrleitung und den Kontaktkraftsensoren darstellen, die auf den rechten und linken Wippenstützen der i-ten Kohleschleifleiste der Stromabnehmerwippe installiert sind, v_{L}(t) einen Geschwindigkeitswert der Stromabnehmerwippe in der Längsrichtung zum Zeitpunkt t darstellt, v_{0,L} eine Anfangsgeschwindigkeit der Stromabnehmerwippe in der Längsrichtung darstellt, a_{L}(t) einen Beschleunigungswert a_{L} der Stromabnehmerwippe in der Längsrichtung zum Zeitpunkt t darstellt, D_{L}(t) eine Fahrstrecke des Zugs zum Zeitpunkt t darstellt, und D_{0,L} eine anfängliche Fahrstrecke des Zugs darstellt.

9. Überwachungssystem nach Anspruch 1, **dadurch gekennzeichnet, dass** der Stromabnehmer ein Viergelenkgestänge umfasst; und
die Lastsensoren an einem oder mehreren der folgenden Orte installiert sind:
an einem Oberarm (323) des Viergelenkgestänges, einem Unterarm (322) des Viergelenkgestänges und einer Zugstange (321) des Viergelenkgestänges.

10. Überwachungssystem nach Anspruch 9, **dadurch gekennzeichnet, dass** die Lastsensoren auf dem Umfang desselben Querschnitts eines beliebigen Abschnitts der Zugstange installiert sind, und das Lastsignal verwendet wird, um eine Zugkraft der Zugstange (321) anzuzeigen;
der Prozessor (110) die folgende Formel verwendet, um einen Zugkraftwert der Zugstange (321) zu bestimmen: ${F}_{pf} \left(t\right) = {\sum }_{n = 1}^{N} {K}_{pf , n} \left\{{λ}_{n}\left(t\right)-{λ}_{0 , n}+{k}_{T , n}\left[T\left(t\right)-{T}_{0}\right]\right\}$
wobei F_{pf}(t) den Zugkraftwert der Zugstange (321) zum Zeitpunkt t darstellt, N die Gesamtanzahl von Lastsensoren auf demselben Querschnitt der Zugstange (321) darstellt, K_{pf,n} einen Zugkraftkoeffizienten des n-ten faseroptischen Lastsensors darstellt, λₙ(t) einen Wellenlängenwert des n-ten Lastsensors zum Zeitpunkt t darstellt, λ_{0,n} den Wellenlängenwert des n-ten faseroptischen Lastsensors darstellt, wenn keine Last vorhanden ist, k_{T,n} einen Temperaturdriftkoeffizienten des n-ten faseroptischen Lastsensors darstellt, T(t)) einen Temperaturwert zum Zeitpunkt t darstellt, und T₀ den Temperaturwert zum Anfangszeitpunkt darstellt.

11. Überwachungssystem nach Anspruch 9, **dadurch gekennzeichnet, dass** die Lastsensoren paarweise auf dem Umfang desselben Querschnitts eines beliebigen Abschnitts der Zugstange (321) installiert sind, und das Paar von Lastsensoren zentralsymmetrisch ist, und das Lastsignal verwendet wird, um ein Biegemoment der Zugstange (321) anzuzeigen;
der Prozessor (110) die folgende Formel verwendet, um einen Biegemomentwert der Zugstange (321) zu bestimmen: ${M}_{i , i - opp} \left(t\right) = {K}_{M , i} \left\{{λ}_{i}\left(t\right)-{λ}_{0 , i}+{k}_{T , i}\left[T\left(t\right)-{T}_{0}\right]\right\} - {K}_{M - opp , i - opp} \left\{{λ}_{opp , i - opp}\left(t\right)-{λ}_{0 - opp , i - opp}+{k}_{T - opp , i - opp}\left[T\left(t\right)-{T}_{0}\right]\right\}$
wobei $i = 1 , 2 , 3 , ⋯ , I , I = \frac{N}{2} ;$
wobei M_{i,i-opp}(t) den Biegemomentwert zum Zeitpunkt t in einer i,i-opp-Biegerichtung der Zugstange (321) darstellt, N die Gesamtanzahl von Lastsensoren auf demselben Querschnitt der Zugstange (321) darstellt, I die Anzahl von Paaren von zwei Lastsensoren auf demselben Querschnitt der Zugstange (321) darstellt, K_{M,i} einen Biegemomentkoeffizienten des i-ten Lastsensors der Zugstange (321) darstellt, λᵢ(t) einen Wellenlängenwert des i-ten faseroptischen Lastsensors zum Zeitpunkt t darstellt, λ_{0,i} den Wellenlängenwert des i-ten faseroptischen Lastsensors darstellt, wenn keine Last vorhanden ist, k_{T,i} einen Temperaturdriftkoeffizienten des i-ten faseroptischen Lastsensors darstellt, K_{M-opp,i-opp} den Biegemomentkoeffizienten des dem i-ten faseroptischen Lastsensor der Zugstange (321) gegenüberliegenden faseroptischen Lastsensors darstellt, λ_{opp,i-opp(t)} einen Wellenlängenwert des dem i-ten faseroptischen Lastsensor gegenüberliegenden faseroptischen Lastsensors zum Zeitpunkt t darstellt, λ_{0-opp,i-opp} den Wellenlängenwert des dem i-ten faseroptischen Lastsensor gegenüberliegenden i-ten faseroptischen Lastsensors darstellt, wenn keine Last vorliegt, k_{T-opp,i-opp} einen Temperaturdriftkoeffizienten des dem i-ten faseroptischen Lastsensor gegenüberliegenden faseroptischen Lastsensors darstellt, T(t) einen Temperaturwert zum Zeitpunkt t darstellt, und den Temperaturwert zum Anfangszeitpunkt darstellt.

12. Überwachungssystem nach Anspruch 1, **dadurch gekennzeichnet, dass** der Stromabnehmer einen Luftbalg und/oder einen Luftzylinder, einen Pneumatiksteuerkasten (35) und eine Gasleitung umfasst, die den Pneumatiksteuerkasten verbindet;
der Luftdrucksensor an einem oder mehreren der folgenden Orte installiert ist:
dem Luftbalg und/oder dem Luftzylinder, einer Innenseite oder einer Oberfläche des Pneumatiksteuerkastens (35), oder mit der Gasleitung gekoppelt.

13. Überwachungssystem nach Anspruch 12, **dadurch gekennzeichnet, dass** der Stromabnehmer ausgewählt ist aus einer Gruppe, die einen Stromabnehmer vom Federgehäusetyp, einen Stromabnehmer vom Blattfedertyp und einen Stromabnehmer vom Zugfedertyp umfasst.

14. Überwachungssystem nach Anspruch 1, **dadurch gekennzeichnet, dass** die faseroptischen Sensoren (101, 102, 103) mittels Schraubbefestigung, Einbetten, Schweißen, Kleben oder Implantieren installiert sind.

## Revendications

1. Système de surveillance pour un pantographe, comprenant :
un ou plusieurs capteurs à fibre optique (101, 102, 103), installés sur le pantographe pour recevoir un signal laser ; et
un processeur (110), couplé aux capteurs à fibre optique (101, 102, 103), et configuré pour traiter le signal laser collecté par les capteurs à fibre optique (101, 102, 103) ;
dans lequel chaque capteur à fibre optique (101, 102, 103) présente une cavité d'interférence optique, le signal laser pénètre dans la cavité d'interférence optique pour former un spectre en forme de peigne, et une longueur de cavité de la cavité d'interférence optique satisfait à la formule suivante : $\frac{{k}_{mid}}{2} \left({λ}_{ctr}-\frac{{W}_{laser}}{2}\right) < {l}_{FP} < \frac{{k}_{mid}}{2} \left({λ}_{ctr}+\frac{{W}_{laser}}{2}\right)$ ${W}_{laser} \leq \frac{2 {l}_{FP}}{{k}_{mid}^{2} - 1}$
dans laquelle *l_{FP}* représente la longueur de cavité de la cavité d'interférence optique, *k_{mid}* représente un module longitudinal prédéfini du capteur à fibre optique, *k_{mid}* est un nombre entier positif et *k_{mid}*≥2, *Wₗₐₛₑᵣ* représente une largeur de bande d'un laser émettant le signal laser et *λ_{ctr}* représente une valeur de longueur d'onde d'un point central de la largeur de bande du laser ; et
dans lequel la cavité d'interférence optique comprend deux miroirs (21) disposés respectivement aux deux extrémités de la cavité d'interférence optique, et la longueur de cavité de la cavité d'interférence optique est une distance entre les deux miroirs (21) ;
**caractérisé en ce que** le système de surveillance comprend, en tant que les un ou plusieurs capteurs à fibre optique, au moins un capteur de force de contact pour collecter un signal de pression, au moins un capteur de charge pour collecter un signal de charge, au moins un accéléromètre pour collecter un signal d'accélération, au moins un capteur de courant pour collecter un signal de courant, au moins un capteur de température pour collecter un signal de température et au moins un capteur de pression d'air pour collecter un signal de pression d'air ;
dans lequel un seul pic dans le spectre en forme de peigne délivré depuis la cavité d'interférence optique est situé dans la largeur de bande du laser.

2. Système de surveillance selon la revendication 1, **caractérisé en ce que** la longueur de cavité de la cavité d'interférence optique satisfait à la formule suivante : ${l}_{ctr} = {k}_{mid} \frac{{λ}_{ctr}}{2}$ dans lequel *l_{ctr}* représente la longueur de cavité de la cavité d'interférence optique.

3. Système de surveillance selon la revendication 1, **caractérisé en ce que** le capteur à fibre optique (101, 102, 103) est un capteur passif.

4. Système de surveillance selon la revendication 1, **caractérisé en ce que** le pantographe comprend un ou plusieurs archets (34) de pantographe, et chaque archet (34) de pantographe comprend un support (342) d'archet ;
dans lequel, pour des archets (34) de pantographe équipés de capteurs de force de contact, les capteurs de force de contact sont installés à l'intérieur des supports (342) d'archet ou sur une surface de ceux-ci.

5. Système de surveillance selon la revendication 4, **caractérisé en ce que** le signal de pression est utilisé pour indiquer une force de contact entre l'archet (34) de pantographe et une ligne caténaire ; et
la force de contact entre l'archet (34) de pantographe et la ligne caténaire est déterminée par le processeur (110) en utilisant la formule suivante : ${F}_{S , i , j} \left(t\right) = {K}_{S , i , j} \left[{λ}_{i , j}\left(t\right)-{λ}_{0 , i , j}+{k}_{T , i , j}\left(T\left(t\right)-{T}_{0}\right)\right]$ ${F}_{cp} \left(t\right) = {\sum }_{i = 1}^{{N}_{C}} {\sum }_{j = 1}^{{N}_{S} = 2} {F}_{S , i , j} \left(t\right)$
dans laquelle F_{S,i,j}(t) représente une valeur de la force de contact à l'instant t entre la ligne caténaire et le capteur de force de contact sur le j-ème support d'archet de la i-ème structure de bande de contact en carbone de l'archet de pantographe, K_{S,i,j} représente un coefficient de force de contact du j-ème capteur de force de contact de la i-ème structure de bande de contact en carbone,
λ_{i,j}(t) représente une valeur de longueur d'onde du j-ème capteur de force de contact de la i-ème structure de bande de contact en carbone à l'instant t, λ_{0,i,j} représente la valeur de longueur d'onde du j-ème capteur de force de contact de la i-ème structure de bande de contact en carbone lorsqu'il n'existe pas de force mutuelle entre l'archet de pantographe et la ligne caténaire, k_{T,i,j} représente un coefficient de dérive thermique du j-ème capteur de force de contact de la i-ème structure de bande de contact en carbone, T(t) représente une valeur de température à l'instant t, T₀ représente une valeur de température initiale, F_{cp}(t) représente une valeur de la force de contact à l'instant t entre l'archet de pantographe et la ligne caténaire, N_{C} représente le nombre des structures de bande de contact en carbone sur les archets de pantographe et N_{S} représente le nombre des supports d'archet sur la même bande de contact en carbone.

6. Système de surveillance selon la revendication 1, **caractérisé en ce que** le pantographe comprend un ou plusieurs archets (34) de pantographe, dans lequel chaque archet (34) de pantographe comprend une bande de contact en carbone (341), des supports (342) d'archet reliés respectivement aux deux extrémités de la bande de contact en carbone (341) et des pièces de liaison pour relier la bande de contact en carbone (341) et chaque support (342) d'archet ; pour des archets (34) de pantographe équipés d'accéléromètres, les accéléromètres sont installés dans un ou plusieurs des emplacements suivants : à l'intérieur des supports (342) d'archet ou sur leur surface, et sur les pièces de liaison.

7. Système de surveillance selon la revendication 6, **caractérisé en ce que** le pantographe comprend un ou plusieurs archets (34) de pantographe, dans lequel chaque archet (34) de pantographe comprend des supports (342) d'archet ; pour un archet (34) de pantographe équipé de capteurs de force de contact, le capteur de force de contact est installé à l'intérieur du support (342) d'archet ou sur la surface de celui-ci ;
le signal de pression est utilisé pour indiquer une force de contact entre l'archet (34) de pantographe et une ligne caténaire ;
le signal d'accélération est utilisé pour indiquer une accélération d'au moins un archet (34) de pantographe dans une direction horizontale et une accélération d'au moins un archet (34) de pantographe dans une direction verticale ;
le processeur (110) utilise les formules suivantes pour déterminer une valeur d'accélération de l'archet (34) de pantographe dans la direction verticale et la force de contact entre l'archet (34) de pantographe et la ligne caténaire : ${a}_{V} \left(t\right) = {K}_{V} \left[{λ}_{V}\left(t\right)-{λ}_{0 , V}+{k}_{T , V}\left(T\left(t\right)-{T}_{0}\right)\right]$ ${F}_{S} \left(t\right) = {K}_{S} \left[{λ}_{S}\left(t\right)-{λ}_{0 , S}+{k}_{T , S}\left(T\left(t\right)-{T}_{0}\right)\right]$
dans lesquelles a_{V}(t) représente une valeur d'accélération de l'archet de pantographe dans la direction verticale à l'instant t, K_{V} représente un coefficient d'accélération de l'accéléromètre dans la direction verticale, λ_{V}(t) représente une valeur de longueur d'onde de l'accéléromètre dans la direction verticale à l'instant t, λ_{0,V} représente une valeur de longueur d'onde de l'accéléromètre dans la direction verticale dans un état statique, k_{T,V} représente un coefficient de dérive thermique de l'accéléromètre dans la direction verticale, F_{S}(t) représente une valeur de force de contact entre un capteur de force de contact et la ligne caténaire à l'instant t, K_{S} représente un coefficient de force de contact du capteur de force de contact, λ_{S}(t) représente une valeur de longueur d'onde du capteur de force de contact à l'instant t, λ_{0,S} est utilisé pour indiquer la valeur de longueur d'onde du capteur de force de contact lorsqu'il n'existe pas de force mutuelle entre l'archet de pantographe et la ligne caténaire, k_{T,S} représente un coefficient de dérive thermique du capteur de force de contact, T(t) représente une valeur de température T à l'instant t et T₀ représente une valeur de température initiale.

8. Système de surveillance selon la revendication 6, **caractérisé en ce que** le pantographe comprend un ou plusieurs archets (34) de pantographe, dans lequel chaque archet (34) de pantographe comprend des supports (342) d'archet ; pour un archet (34) de pantographe équipé d'un capteur de force de contact, le capteur de force de contact est installé à l'intérieur du support (342) d'archet ou sur la surface de celui-ci ;
le signal de pression est utilisé pour indiquer une force de contact entre l'archet (34) de pantographe et la ligne caténaire ;
le signal d'accélération est utilisé pour indiquer une accélération d'au moins un archet (34) de pantographe dans une direction longitudinale ;
le processeur utilise la formule suivante pour déterminer un décalage de la ligne caténaire : ${Z}_{C} \left(t\right) = {L}_{S} \left(\frac{{F}_{S , i , gch} \left(t\right)}{{F}_{S , i , drg} \left(t\right) + {F}_{S , i , gch} \left(t\right)}-\frac{1}{2}\right) , i = 1 , 2 , 3 , 4$ ou, ${Z}_{C} \left(t\right) = {L}_{S} \left(\frac{1}{2}-\frac{{F}_{S , i , drg} \left(t\right)}{{F}_{S , i , drg} \left(t\right) + {F}_{S , i , gch} \left(t\right)}\right) , i = 1 , 2 , 3 , 4$ ${ν}_{L} \left(t\right) = {ν}_{0 , L} + {\int }_{0}^{t} {a}_{L} \left(t\right) dt$ ${D}_{L} \left(t\right) = {D}_{0 , L} + {\int }_{0}^{t} {ν}_{L} \left(t\right) dt$
dans lesquelles, Z_{C}(t) représente le décalage de la ligne caténaire à l'instant t, Z_{C} est une valeur négative sur un côté droit d'une direction vers l'avant d'un train, Z_{C} est une valeur positive sur un côté gauche de la direction vers l'avant du train, L_{S} représente une distance entre un centre des supports d'archet avec un système tampon ou/et d'amortissement aux deux extrémités de la même bande de contact en carbone, F_{S},i,drg et F_{S},i,gch représentent respectivement des valeurs de force de contact entre la ligne caténaire et les capteurs de force de contact installés sur les supports d'archet droit et gauche de la i-ème bande de contact en carbone de l'archet de pantographe, v_{L}(t) représente une valeur de vitesse de l'archet de pantographe dans la direction longitudinale à l'instant t, v_{0,L} représente une vitesse initiale de l'archet de pantographe dans la direction longitudinale, a_{L}(t) représente une valeur d'accélération a_{L} de l'archet de pantographe dans la direction longitudinale à l'instant t, D_{L}(t) représente une distance de déplacement du train à l'instant t et D_{0,L} représente une distance de déplacement initiale du train.

9. Système de surveillance selon la revendication 1, **caractérisé en ce que** le pantographe comprend une structure de liaison à quatre barres ; et
les capteurs de charge sont installés sur un ou plusieurs des emplacements suivants :
un bras supérieur (323) de la structure de liaison à quatre barres, un bras inférieur (322) de la structure de liaison à quatre barres et une bielle de tirage (321) de la structure de liaison à quatre barres.

10. Système de surveillance selon la revendication 9, **caractérisé en ce que** les capteurs de charge sont installés sur la même circonférence de section de toute section de la bielle de tirage, et le signal de charge est utilisé pour indiquer une tension de la bielle de tirage (321) ;
le processeur (110) utilise la formule suivante pour déterminer une valeur de tension de la bielle de tirage (321) : ${F}_{pf} \left(t\right) = {\sum }_{n = 1}^{N} {K}_{pf , n} \left\{{λ}_{n}\left(t\right)-{λ}_{0 , n}+{k}_{T , n}\left[T\left(t\right)-{T}_{0}\right]\right\}$
dans lequel F_{pf}(t) représente la valeur de tension de la bielle de tirage (321) à l'instant t, N représente le nombre total de capteurs de charge sur la même section transversale de la bielle de tirage (321), K_{pf,n} représente un coefficient de tension du n-ème capteur de charge à fibre optique, λₙ(t) représente une valeur de longueur d'onde du n-ème capteur de charge à l'instant t, λ_{0,n} représente la valeur de longueur d'onde du n-ème capteur de charge à fibre optique lorsqu'il n'y a pas de charge, k_{T,n} représente un coefficient de dérive thermique du n-ème capteur de charge à fibre optique, T(t)) représente une valeur de température à l'instant t et T₀ représente la valeur de température à l'instant initial.

11. Système de surveillance selon la revendication 9, **caractérisé en ce que**
les capteurs de charge sont installés par paires sur la même circonférence de section de toute section de la bielle de tirage (321), et les deux capteurs de charge sont symétriques centralement, et le signal de charge est utilisé pour indiquer un moment de flexion de la bielle de tirage (321) ;
le processeur (110) utilise la formule suivante pour déterminer une valeur de moment de flexion de la bielle de tirage (321) : ${M}_{i , i - opp} \left(t\right) = {K}_{M , i} \left\{{λ}_{i}\left(t\right)-{λ}_{0 , i}+{k}_{T , i}\left[T\left(t\right)-{T}_{0}\right]\right\} - {K}_{M - opp , i - opp} \left\{{λ}_{opp , i - opp}\left(t\right)-{λ}_{0 - opp , i - opp}+{k}_{T - opp , i - opp}\left[T\left(t\right)-{T}_{0}\right]\right\}$
dans $i = 1 , 2 , 3 , ⋯ , I , I = \frac{N}{2} ;$
dans lequel M_{i,i-opp}(t) représente la valeur de moment de flexion à l'instant t dans une direction de flexion i,i-opp de la bielle de tirage (321), N représente le nombre total de capteurs de charge sur la même section transversale de la bielle de tirage (321), I représente le nombre de paires de deux capteurs de charge sur la même section transversale de la bielle de tirage (321), K_{M,i} représente un coefficient de moment de flexion du i-ème capteur de charge de la bielle de tirage (321), λᵢ(t) représente une valeur de longueur d'onde du i-ème capteur de charge à fibre optique à l'instant t, λ_{0,i} représente la valeur de longueur d'onde du i-ème capteur de charge à fibre optique lorsqu'il n'y a pas de charge, k_{T,i} représente un coefficient de dérive thermique du i-ème capteur de charge à fibre optique, K_{M-opp,i-opp} représente le coefficient de moment de flexion du capteur de charge à fibre optique faisant face au i-ème capteur de charge à fibre optique de la bielle de tirage (321), λ_{opp,i-opp}(t) représente une valeur de longueur d'onde du i-ème capteur de charge à fibre optique faisant face au i-ème capteur de charge à fibre optique à l'instant t, λ_{0-opp,i-opp} représente la valeur de longueur d'onde du i-ème capteur de charge à fibre optique faisant face au i-ème capteur de charge à fibre optique lorsqu'il n'y a pas de charge, k_{T-opp,i-opp} représente un coefficient de dérive thermique du i-ème capteur de charge à fibre optique faisant face au i-ème capteur de charge à fibre optique, T(t) représente une valeur de température à l'instant t et représente la valeur de température à l'instant initial.

12. Système de surveillance selon la revendication 1, **caractérisé en ce que** le pantographe comprend un soufflet pneumatique et/ou un vérin pneumatique, un boîtier de commande pneumatique (35) et une conduite de gaz reliant le boîtier de commande pneumatique ;
le capteur de pression d'air est installé sur un ou plusieurs des emplacements suivants :
le soufflet pneumatique et/ou le vérin pneumatique, à l'intérieur du boîtier de commande pneumatique (35) ou sur la surface de celui-ci, ou couplé à la conduite de gaz.

13. Système de surveillance selon la revendication 12, **caractérisé en ce que** le pantographe est choisi dans un groupe comprenant un pantographe de type à ressort-barillet, un pantographe de type à ressort à lames et un pantographe de type à ressort de traction.

14. Système de surveillance selon la revendication 1, **caractérisé en ce que** les capteurs à fibre optique (101, 102, 103) sont installés par vissage, insertion, soudage, collage ou implantation.
